(19) Europäisches Patentamt / European Patent Office / Office européen des brevets

(11) **EP 4 014 650 B1**

(12) **EUROPEAN PATENT SPECIFICATION**

(45) Date of publication and mention
of the grant of the patent:
**04.03.2026 Bulletin 2026/10**

(21) Application number: **20866153.8**

(22) Date of filing: **15.09.2020**

(51) International Patent Classification (IPC):
*H04L 1/1607* (2023.01)   *H04L 1/1812* (2023.01)
*H04L 1/1829* (2023.01)   *H04L 5/00* (2006.01)
*H04W 52/36* (2009.01)   *H04W 52/12* (2009.01)
*H04W 74/08* (2024.01)   *H04W 16/14* (2009.01)
*H04L 1/00* (2006.01)   *H04W 72/566* (2023.01)

(52) Cooperative Patent Classification (CPC):
**H04L 1/1671; H04L 1/0026; H04L 1/0031;**
**H04L 1/1664; H04L 1/1854; H04L 1/1861;**
**H04W 72/569;** H04L 1/1812; H04W 72/21

(86) International application number:
**PCT/KR2020/012398**

(87) International publication number:
**WO 2021/054689 (25.03.2021 Gazette 2021/12)**

(54) **METHOD AND APPARATUS FOR UCI MULTIPLEXING IN WIRELESS COMMUNICATION SYSTEMS**

VERFAHREN UND VORRICHTUNG FÜR UCI-MULTIPLEXING IN EINEM DRAHTLOSEN KOMMUNIKATIONSSYSTEM

PROCÉDÉ ET APPAREIL DESTINÉS AU MULTIPLEXAGE D'UCI DANS DES SYSTÈMES DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: 20.09.2019   US 201962903370 P
01.11.2019   US 201962929703 P
06.11.2019   US 201962931529 P
08.11.2019   US 201962932726 P
08.11.2019   US 201962932988 P
21.11.2019   US 201962938680 P
02.12.2019   US 201962942510 P
21.07.2020   US 202016947171

(43) Date of publication of application:
**22.06.2022 Bulletin 2022/25**

(73) Proprietor: **Samsung Electronics Co., Ltd.**
**Suwon-si, Gyeonggi-do 16677 (KR)**

(72) Inventors:
• **LI, Yingzhe**
**Mountain View, California 94043 (US)**
• **SI, Hongbo**
**Mountain View, California 94043 (US)**
• **PAPASAKELLARIOU, Aris**
**Mountain View, California 94043 (US)**

(74) Representative: **Gulde & Partner**
**Patent- und Rechtsanwaltskanzlei mbB**
**Berliner Freiheit 2**
**10785 Berlin (DE)**

(56) References cited:
**US-A1- 2013 114 455     US-A1- 2018 167 931**

• **AD-HOC CHAIR (ERICSSON): "Chairman's notes of AI 7.2.2 NR-Based Access to Unlicensed Spectrum", vol. RAN WG1, no. Reno, Nevada, USA; 20191118 - 20191122, 25 November 2019 (2019-11-25), XP051830664, Retrieved from the Internet <URL:https://ftp.3gpp.org/tsg_ran/ WG1_RL1/TSGR1_99/Docs/R1-1913383.zip> [retrieved on 20191125]**

- INTEL CORPORATION: "Enhancements to configured grants for NR-unlicensed", vol. RAN WG1, no. Prague, Czechia; 20190826 - 20190830, 17 August 2019 (2019-08-17), XP051765235, Retrieved from the Internet <URL:http://www.3gpp.org/ftp/tsg_ran/WG1_RL1/TSGR1_98/Docs/R1-1908627.zip> [retrieved on 20190817]
- INTEL CORPORATION: "Enhancements to configured grants for NR-unlicensed", vol. RAN WG1, no. Reno, Nevada, USA; 20190513 - 20190517, 13 May 2019 (2019-05-13), XP051728239, Retrieved from the Internet <URL:http://www.3gpp.org/ftp/Meetings%5F3GPP%5FSYNC/RAN1/Docs/R1%2D1906788%2Ezip> [retrieved on 20190513]
- INTEL CORPORATION: "Enhancements to configured grants for NR-unlicensed", 3GPP DRAFT; R1-1908627 - INTEL - CONFIGURED GRANT FOR NR-U, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Prague, Czechia; 20190826 - 20190830, 17 August 2019 (2019-08-17), Mobile Competence Centre ; 650, route des Lucioles ; F-06921 Sophia-Antipolis Cedex ; France, XP051765235
- PANASONIC: "Configured grant enhancements for NR-U", 3GPP DRAFT; R1-1908817, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Prague, Czech Republic; 20190826 - 20190830, 16 August 2019 (2019-08-16), Mobile Competence Centre ; 650, route des Lucioles ; F-06921 Sophia-Antipolis Cedex ; France, XP051765425
- VIVO: "Discussion on the enhancements to configured grants", 3GPP DRAFT; R1-1908143, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Prague, CZ; 20190826 - 20190830, 17 August 2019 (2019-08-17), Mobile Competence Centre ; 650, route des Lucioles ; F-06921 Sophia-Antipolis Cedex ; France, XP051764762

**Description**

[Technical Field]

The present application relates generally to wireless communication systems, more specifically, the present disclosure relates to window size adaptation with wideband operation in NR unlicensed.

[Background Art]

Considering the development of wireless communication from generation to generation, the technologies have been developed mainly for services targeting humans, such as voice calls, multimedia services, and data services. Following the commercialization of 5G (5th-generation) communication systems, it is expected that the number of connected devices will exponentially grow. Increasingly, these will be connected to communication networks. Examples of connected things may include vehicles, robots, drones, home appliances, displays, smart sensors connected to various infrastructures, construction machines, and factory equipment. Mobile devices are expected to evolve in various form-factors, such as augmented reality glasses, virtual reality headsets, and hologram devices. In order to provide various services by connecting hundreds of billions of devices and things in the 6G (6th-generation) era, there have been ongoing efforts to develop improved 6G communication systems. For these reasons, 6G communication systems are referred to as beyond-5G systems.

6G communication systems, which are expected to be commercialized around 2030, will have a peak data rate of tera (1,000 giga)-level bps and a radio latency less than 100$\mu$sec, and thus will be 50 times as fast as 5G communication systems and have the 1/10 radio latency thereof.

In order to accomplish such a high data rate and an ultra-low latency, it has been considered to implement 6G communication systems in a terahertz band (for example, 95GHz to 3THz bands). It is expected that, due to severer path loss and atmospheric absorption in the terahertz bands than those in mmWave bands introduced in 5G, technologies capable of securing the signal transmission distance (that is, coverage) will become more crucial. It is necessary to develop, as major technologies for securing the coverage, radio frequency (RF) elements, antennas, novel waveforms having a better coverage than orthogonal frequency division multiplexing (OFDM), beamforming and massive multiple input multiple output (MIMO), full dimensional MIMO (FD-MIMO), array antennas, and multiantenna transmission technologies such as large-scale antennas. In addition, there has been ongoing discussion on new technologies for improving the coverage of terahertz-band signals, such as metamaterial-based lenses and antennas, orbital angular momentum (OAM), and reconfigurable intelligent surface (RIS).

Moreover, in order to improve the spectral efficiency and the overall network performances, the following technologies have been developed for 6G communication systems: a full-duplex technology for enabling an uplink transmission and a downlink transmission to simultaneously use the same frequency resource at the same time; a network technology for utilizing satellites, high-altitude platform stations (HAPS), and the like in an integrated manner; an improved network structure for supporting mobile base stations and the like and enabling network operation optimization and automation and the like; a dynamic spectrum sharing technology via collison avoidance based on a prediction of spectrum usage; an use of artificial intelligence (AI) in wireless communication for improvement of overall network operation by utilizing AI from a designing phase for developing 6G and internalizing end-to-end AI support functions; and a next-generation distributed computing technology for overcoming the limit of UE computing ability through reachable super-high-performance communication and computing resources (such as mobile edge computing (MEC), clouds, and the like) over the network. In addition, through designing new protocols to be used in 6G communication systems, developing mecahnisms for implementing a hardware-based security environment and safe use of data, and developing technologies for maintaining privacy, attempts to strengthen the connectivity between devices, optimize the network, promote softwarization of network entities, and increase the openness of wireless communications are continuing.

It is expected that research and development of 6G communication systems in hyper-connectivity, including person to machine (P2M) as well as machine to machine (M2M), will allow the next hyper-connected experience. Particularly, it is expected that services such as truly immersive extended reality (XR), high-fidelity mobile hologram, and digital replica could be provided through 6G communication systems. In addition, services such as remote surgery for security and reliability enhancement, industrial automation, and emergency response will be provided through the 6G communication system such that the technologies could be applied in various fields such as industry, medical care, automobiles, and home appliances.

A communication system includes a downlink (DL) that conveys signals from transmission points such as base stations (BSs) or NodeBs to user equipments (UEs) and an uplink (UL) that conveys signals from UEs to reception points such as NodeBs. A UE, also commonly referred to as a terminal or a mobile station, may be fixed or mobile and may be a cellular phone, a personal computer device, or an automated device. An eNodeB (eNB), referring to a NodeB in long-term evolution (LTE) communication system, and a gNodeB (gNB), referring to a NodeB in new radio (NR) communication system, may also be referred to as an access point or other equivalent terminology.

3GPP document R1-1908627 "Enhancements to configured grants for NR-unlicensed" from Intel Corporation, 3GPP TSG RAN WG1 Meeting #98, Prague, Czech Republic, 26th - 30th of August, 2019, discloses that when a PUCCH overlaps with CG-PUSCH within a PUCCH group, the CG-UCI is of paramount importance and is always carried and mapped before any other existing UCI. Then the priority order for multiplexing the UCI on the CG-PUSCH if enough resources are available is CG-UCI > HARQ-ACK > CSI part 1 > CSI part 2 > data. Otherwise, some predefined dropping rules must be enforced.

[Disclosure of Invention]

[Solution to Problem]

The present disclosure relates to a pre-5G or 5G communication system to be provided for window size adaptation with wideband operation in NR unlicensed.

Independent claim 1 defines a user equipment according to the invention.

Independent claim 3 defines a corresponding base station according to the invention.

Independent claims 5 and 7 define the corresponding methods at the user equipment and at the base station respectively, according to the invention.

Preferred embodiments are defined in the dependent claims.

Other technical features may be readily apparent to one skilled in the art from the following figures, descriptions, and claims.

Before undertaking the DETAILED DESCRIPTION below, it may be advantageous to set forth definitions of certain words and phrases used throughout this patent document. The term "couple" and its derivatives refer to any direct or indirect communication between two or more elements, whether or not those elements are in physical contact with one another. The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system or part thereof that controls at least one operation. Such a controller may be implemented in hardware or a combination of hardware and software and/or firmware. The functionality associated with any particular controller may be centralized or distributed, whether locally or remotely. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for other certain words and phrases are provided throughout this patent document. Those of ordinary skill in the art should understand that in many if not most instances, such definitions apply to prior as well as future uses of such defined words and phrases.

[Brief Description of Drawings]

For a more complete understanding of the present disclosure and its advantages, reference is now made to the following description taken in conjunction with the accompanying drawings, in which like reference numerals represent like parts:

FIGURE 1 illustrates an example wireless network according to embodiments of the present disclosure;

FIGURE 2 illustrates an example gNB according to embodiments of the present disclosure;

FIGURE 3 illustrates an example UE according to embodiments of the present disclosure;

FIGURE 4 illustrates an example transmitter structure using OFDM according to embodiments of the present disclosure;

FIGURE 5 illustrates an example receiver structure using OFDM according to embodiments of the present disclosure;

FIGURE 6 illustrates an example encoding process for a DCI format according to embodiments of the present disclosure;

FIGURE 7 illustrates an example decoding process for a DCI format for use with a UE according to embodiments of the present disclosure;

FIGURE 8 illustrates an example channel access procedure according to embodiments of the present disclosure;

FIGURE 9 illustrates an example CWS bandwidth according to embodiments of the present disclosure;

FIGURE 10 illustrates another example CWS bandwidth according to embodiments of the present disclosure;

FIGURE 11 illustrates yet another example CWS bandwidth according to embodiments of the present disclosure;

FIGURE 12 illustrates an example CWS bandwidth and PDSCH according to embodiments of the present disclosure;

FIGURE 13 illustrates an example active BWP switching according to embodiments of the present disclosure;

FIGURE 14 illustrates an example CWS for BWP according to embodiments of the present disclosure;

FIGURE 15 illustrates an example BWP and CBG according to embodiments of the present disclosure;

FIGURE 16 illustrates an example BWP according to embodiments of the present disclosure;

FIGURE 17 illustrates an example BWP and CBG according to embodiments of the present disclosure;

FIGURE 18 illustrates an example UL BWP in carrier BW according to embodiments of the present disclosure;

FIGURE 19 illustrates an example PUSCH in carrier BW according to embodiments of the present disclosure;

FIGURE 20 illustrates a flow chart of a method for multiplexing according to embodiments of the present disclosure;

FIGURE 21 illustrates another flow chart of a method for multiplexing according to embodiments of the present disclosure;

FIGURE 22 illustrates yet another flow chart of a method for multiplexing according to embodiments of the present disclosure;

FIGURE 23 illustrates an example LBT location according to embodiments of the present disclosure;

FIGURE 24 illustrates a flow chart of a method for adaptive LBT procedure according to embodiments of the present disclosure;

FIGURE 25 illustrates another flow chart of a method for adaptive LBT procedure according to embodiments of the present disclosure;

FIGURE 26 illustrates a flow chart of a method for ordering of LBT type according to embodiments of the present disclosure;

FIGURE 27 illustrates another flow chart of a method for ordering of LBT type according to embodiments of the present disclosure; and

FIGURE 28 illustrates a flow chart of a method for window size adaptation according to embodiments of the present disclosure.

[Mode for the Invention]

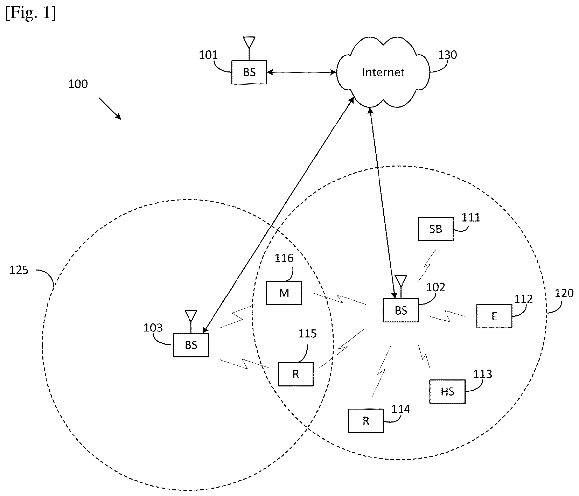

FIGURE 1 through FIGURE 28, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device.

The following documents are relevant for the embodiments of this disclosure: 3GPP TS 38.211 v15.4.0, "NR; Physical channels and modulation;" 3GPP TS 38.212 v15.4.0, "NR; Multiplexing and Channel coding;" 3GPP TS 38.213 v15.4.0, "NR; Physical Layer Procedures for Control;" 3GPP TS 38.214 v15.4.0, "NR; Physical Layer Procedures for Data;" 3GPP TS 38.331 v15.4.0, "NR; Radio Resource Control (RRC) Protocol Specification;" ETSI EN 301 893 V2.1.1, "5 GHz RLAN; Harmonized Standard covering the essential requirements of article 3.2 of Directive 2014/53/EU", 2017; ETSI EN 302 567 V2.1.1, "Multiple-Gigabit/s radio equipment operating in the 60 GHz band; Harmonized Standard covering the essential requirements of article 3.2 of Directive 2014/53/EU," 2017; 3GPP TR 36.889 V13.0.0, "Study on Licensed-Assisted Access to Unlicensed Spectrum," 2015; and IEEE Std 802.11-2016, "Part 11: Wireless LAN Medium Access Control (MAC) and Physical Layer (PHY) Specifications," 2016.

FIGURES 1-3 below describe various embodiments implemented in wireless communications systems and with the use of orthogonal frequency division multiplexing (OFDM) or orthogonal frequency division multiple access (OFDMA) communication techniques. The descriptions of FIGURES 1-3 are not meant to imply physical or architectural limitations to the manner in which different embodiments may be implemented. Different embodiments of the present disclosure may be implemented in any suitably arranged communications system.

FIGURE 1 illustrates an example wireless network according to embodiments of the present disclosure. The embodiment of the wireless network shown in FIGURE 1 is for illustration only. Other embodiments of the wireless network 100 could be used without departing from the scope of the present disclosure.

As shown in FIGURE 1, the wireless network includes a gNB 101, a gNB 102, and a gNB 103. The gNB 101 communicates with the gNB 102 and the gNB 103. The gNB 101 also communicates with at least one network 130, such as the Internet, a proprietary Internet Protocol (IP) network, or other data network.

The gNB 102 provides wireless broadband access to the network 130 for a first plurality of user equipments (UEs) within a coverage area 120 of the gNB 102. The first plurality of UEs includes a UE 111, which may be located in a small business; a UE 112, which may be located in an enterprise (E); a UE 113, which may be located in a WiFi hotspot (HS); a UE 114, which may be located in a first residence (R); a UE 115, which may be located in a second residence (R); and a UE 116, which may be a mobile device (M), such as a cell phone, a wireless laptop, a wireless PDA, or the like. The gNB 103 provides wireless broadband access to the network 130 for a second plurality of UEs within a coverage area 125 of the gNB 103. The second plurality of UEs includes the UE 115 and the UE 116. In some embodiments, one or more of the gNBs 101-103 may communicate with each other and with the UEs 111-116 using 5G, LTE, LTE-A, WiMAX, WiFi, or other wireless communication techniques.

Depending on the network type, the term "base station" or "BS" can refer to any component (or collection of components) configured to provide wireless access to a network, such as transmit point (TP), transmit-receive point (TRP), an enhanced base station (eNodeB or eNB), a 5G base station (gNB), a macrocell, a femtocell, a WiFi access point (AP), or other wirelessly enabled devices. Base stations may provide wireless access in accordance with one or more wireless communication protocols, e.g., 5G 3GPP new radio interface/access (NR), long term evolution (LTE), LTE advanced (LTE-A), high speed packet access (HSPA), Wi-Fi 802.11a/b/g/n/ac, etc. For the sake of convenience, the terms "BS" and "TRP" are used interchangeably in this patent document to refer to network infrastructure components that provide wireless access to remote terminals. Also, depending on the network type, the term "user equipment" or "UE" can refer to any component such as "mobile station," "subscriber station," "remote terminal," "wireless terminal," "receive point," or "user device." For the sake of convenience, the terms "user equipment" and "UE" are used in this patent document to refer to remote wireless equipment that wirelessly accesses a BS, whether the UE is a mobile device (such as a mobile telephone or smartphone) or is normally considered a stationary device (such as a desktop computer or vending machine).

Dotted lines show the approximate extents of the coverage areas 120 and 125, which are shown as approximately circular for the purposes of illustration and explanation only. It should be clearly understood that the coverage areas associated with gNBs, such as the coverage areas 120 and 125, may have other shapes, including irregular shapes, depending upon the configuration of the gNBs and variations in the radio environment associated with natural and man-made obstructions.

Although FIGURE 1 illustrates one example of a wireless network, various changes may be made to FIGURE 1. For example, the wireless network could include any number of gNBs and any number of UEs in any suitable arrangement. Also, the gNB 101 could communicate directly with any number of UEs and provide those UEs with wireless broadband access to the network 130. Similarly, each gNB 102-103 could communicate directly with the network 130 and provide UEs with direct wireless broadband access to the network 130. Further, the gNBs 101, 102, and/or 103 could provide access to other or additional external networks, such as external telephone networks or other types of data networks.

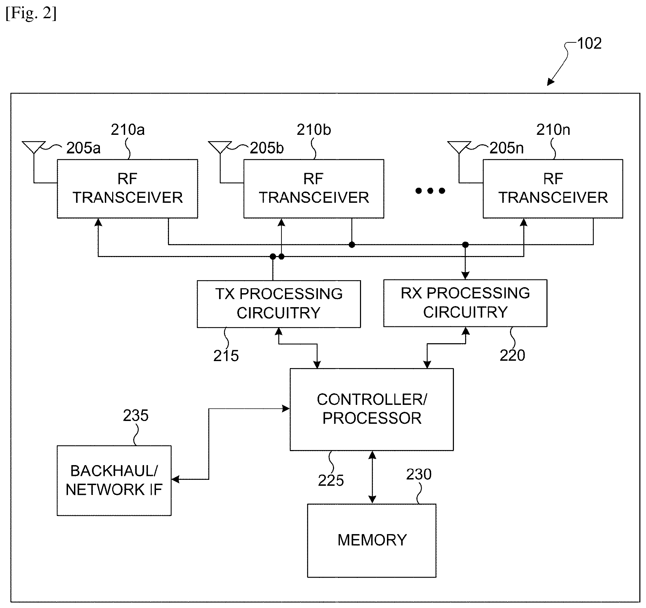

FIGURE 2 illustrates an example gNB 102 according to embodiments of the present disclosure. The embodiment of the gNB 102 illustrated in FIGURE 2 is for illustration only, and the gNBs 101 and 103 of FIGURE 1 could have the same or similar configuration. However, gNBs come in a wide variety of configurations, and FIGURE 2 does not limit the scope of the present disclosure to any particular implementation of a gNB.

As shown in FIGURE 2, the gNB 102 includes multiple antennas 205a-205n, multiple RF transceivers 210a-210n, transmit (TX) processing circuitry 215, and receive (RX) processing circuitry 220. The gNB 102 also includes a controller/processor 225, a memory 230, and a backhaul or network interface 235.

The RF transceivers 210a-210n receive, from the antennas 205a-205n, incoming RF signals, such as signals transmitted by UEs in the network 100. The RF transceivers 210a-210n down-convert the incoming RF signals to generate IF or baseband signals. The IF or baseband signals are sent to the RX processing circuitry 220, which generates processed baseband signals by filtering, decoding, and/or digitizing the baseband or IF signals. The RX processing circuitry 220 transmits the processed baseband signals to the controller/processor 225 for further processing.

The TX processing circuitry 215 receives analog or digital data (such as voice data, web data, e-mail, or interactive video game data) from the controller/processor 225. The TX processing circuitry 215 encodes, multiplexes, and/or digitizes the outgoing baseband data to generate processed baseband or IF signals. The RF transceivers 210a-210n receive the outgoing processed baseband or IF signals from the TX processing circuitry 215 and up-converts the baseband or IF signals to RF signals that are transmitted via the antennas 205a-205n.

The controller/processor 225 can include one or more processors or other processing devices that control the overall operation of the gNB 102. For example, the controller/processor 225 could control the reception of forward channel signals and the transmission of reverse channel signals by the RF transceivers 210a-210n, the RX processing circuitry 220, and the TX processing circuitry 215 in accordance with well-known principles. The controller/processor 225 could support additional functions as well, such as more advanced wireless communication functions. For instance, the controller/processor 225 could support beam forming or directional routing operations in which outgoing signals from multiple antennas 205a-205n are weighted differently to effectively steer the outgoing signals in a desired direction. Any of a wide variety of other functions could be supported in the gNB 102 by the controller/processor 225.

The controller/processor 225 is also capable of executing programs and other processes resident in the memory 230, such as an OS. The controller/processor 225 can move data into or out of the memory 230 as required by an executing process.

The controller/processor 225 is also coupled to the backhaul or network interface 235. The backhaul or network interface 235 allows the gNB 102 to communicate with other devices or systems over a backhaul connection or over a network. The interface 235 could support communications over any suitable wired or wireless connection(s). For example, when the gNB 102 is implemented as part of a cellular communication system (such as one supporting 5G, LTE, or LTE-A), the interface 235 could allow the gNB 102 to communicate with other gNBs over a wired or wireless backhaul connection. When the gNB 102 is implemented as an access point, the interface 235 could allow the gNB 102 to communicate over a wired or wireless local area network or over a wired or wireless connection to a larger network (such as the Internet). The interface 235 includes any suitable structure supporting communications over a wired or wireless connection, such as an Ethernet or RF transceiver.

The memory 230 is coupled to the controller/processor 225. Part of the memory 230 could include a RAM, and another part of the memory 230 could include a Flash memory or other ROM.

Although FIGURE 2 illustrates one example of the gNB 102, various changes may be made to FIGURE 2. For example, the gNB 102 could include any number of each component shown in FIGURE 2. As a particular example, an access point could include a number of interfaces 235, and the controller/processor 225 could support routing functions to route data between different network addresses. As another particular example, while shown as including a single instance of TX processing circuitry 215 and a single instance of RX processing circuitry 220, the gNB 102 could include multiple instances of each (such as one per RF transceiver). Also, various components in FIGURE 2 could be combined, further subdivided, or omitted and additional components could be added according to particular needs.

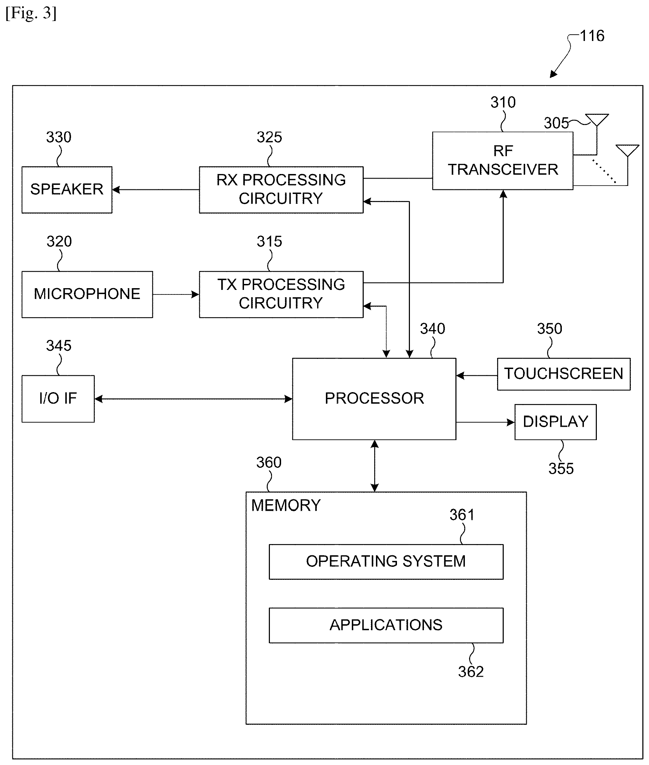

FIGURE 3 illustrates an example UE 116 according to embodiments of the present disclosure. The embodiment of the UE 116 illustrated in FIGURE 3 is for illustration only, and the UEs 111-115 of FIGURE 1 could have the same or similar configuration. However, UEs come in a wide variety of configurations, and FIGURE 3 does not limit the scope of the present disclosure to any particular implementation of a UE.

As shown in FIGURE 3, the UE 116 includes an antenna 305, a radio frequency (RF) transceiver 310, TX processing circuitry 315, a microphone 320, and receive (RX) processing circuitry 325. The UE 116 also includes a speaker 330, a processor 340, an input/output (I/O) interface (IF) 345, a touchscreen 350, a display 355, and a memory 360. The memory 360 includes an operating system (OS) 361 and one or more applications 362.

The RF transceiver 310 receives, from the antenna 305, an incoming RF signal transmitted by a gNB of the network 100. The RF transceiver 310 down-converts the incoming RF signal to generate an intermediate frequency (IF) or baseband signal. The IF or baseband signal is sent to the RX processing circuitry 325, which generates a processed baseband signal by filtering, decoding, and/or digitizing the baseband or IF signal. The RX processing circuitry 325 transmits the processed baseband signal to the speaker 330 (such as for voice data) or to the processor 340 for further processing (such as for web browsing data).

The TX processing circuitry 315 receives analog or digital voice data from the microphone 320 or other outgoing baseband data (such as web data, e-mail, or interactive video game data) from the processor 340. The TX processing circuitry 315 encodes, multiplexes, and/or digitizes the outgoing baseband data to generate a processed baseband or IF signal. The RF transceiver 310 receives the outgoing processed baseband or IF signal from the TX processing circuitry 315 and up-converts the baseband or IF signal to an RF signal that is transmitted via the antenna 305.

The processor 340 can include one or more processors or other processing devices and execute the OS 361 stored in the memory 360 in order to control the overall operation of the UE 116. For example, the processor 340 could control the reception of forward channel signals and the transmission of reverse channel signals by the RF transceiver 310, the RX processing circuitry 325, and the TX processing circuitry 315 in accordance with well-known principles. In some embodiments, the processor 340 includes at least one microprocessor or microcontroller.

The processor 340 is also capable of executing other processes and programs resident in the memory 360, such as processes for beam management. The processor 340 can move data into or out of the memory 360 as required by an executing process. In some embodiments, the processor 340 is configured to execute the applications 362 based on the OS 361 or in response to signals received from gNBs or an operator. The processor 340 is also coupled to the I/O interface 345, which provides the UE 116 with the ability to connect to other devices, such as laptop computers and handheld computers. The I/O interface 345 is the communication path between these accessories and the processor 340.

The processor 340 is also coupled to the touchscreen 350 and the display 355. The operator of the UE 116 can use the touchscreen 350 to enter data into the UE 116. The display 355 may be a liquid crystal display, light emitting diode display, or other display capable of rendering text and/or at least limited graphics, such as from web sites.

The memory 360 is coupled to the processor 340. Part of the memory 360 could include a random-access memory (RAM), and another part of the memory 360 could include a Flash memory or other read-only memory (ROM).

Although FIGURE 3 illustrates one example of the UE 116, various changes may be made to FIGURE 3. For example, various components in FIGURE 3 could be combined, further subdivided, or omitted and additional components could be added according to particular needs. As a particular example, the processor 340 could be divided into multiple processors, such as one or more central processing units (CPUs) and one or more graphics processing units (GPUs). Also, while FIGURE 3 illustrates the UE 116 configured as a mobile telephone or smartphone, UEs could be configured to operate as other types of mobile or stationary devices.

The present disclosure relates generally to wireless communication systems and, more specifically, to reducing power consumption for a user equipment (UE) communicating with a base station and to transmissions to and receptions from a UE of physical downlink control channels (PDCCHs) for operation with dual connectivity. A communication system includes a downlink (DL) that refers to transmissions from a base station or one or more transmission points to UEs and an uplink (UL) that refers to transmissions from UEs to a base station or to one or more reception points.

To meet the demand for wireless data traffic having increased since deployment of 4G communication systems, efforts have been made to develop an improved 5G or pre-5G communication system. Therefore, the 5G or pre-5G communication system is also called a "beyond 4G network" or a "post LTE system." The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), full dimensional MIMO (FD-MIMO), array antenna, an analog beam forming, large scale antenna techniques are discussed in 5G communication systems. In addition, in 5G communication systems, development for system network improvement is under way based on advanced small cells, cloud radio access networks (RANs), ultra-dense networks, device-to-device (D2D) communication, wireless backhaul, moving network, cooperative communication, coordinated multi-points (CoMP), reception-end interference cancellation and the like.

A time unit for DL signaling or for UL signaling on a cell is referred to as a slot and can include one or more symbols. A symbol can also serve as an additional time unit. A frequency (or bandwidth (BW)) unit is referred to as a resource block (RB). One RB includes a number of sub-carriers (SCs). For example, a slot can include 14 symbols, have duration of 1 millisecond or 0.5 milliseconds, and an RB can have a BW of 180 kHz or 360 kHz and include 12 SCs with inter-SC spacing of 15 kHz or 30 kHz, respectively.

DL signals include data signals conveying information content, control signals conveying DL control information (DCI) formats, and reference signals (RS) that are also known as pilot signals. A gNB can transmit data information (e.g., transport blocks) or DCI formats through respective physical DL shared channels (PDSCHs) or physical DL control channels (PDCCHs). A gNB can transmit one or more of multiple types of RS including channel state information RS (CSI-RS) and demodulation RS (DMRS). A CSI-RS is intended for UEs to measure channel state information (CSI) or to perform other measurements such as ones related to mobility support. A DMRS can be transmitted only in the BW of a respective PDCCH or PDSCH and a UE can use the DMRS to demodulate data or control information.

UL signals also include data signals conveying information content, control signals conveying UL control information (UCI), and RS. A UE transmits data information (e.g., transport blocks) or UCI through a respective physical UL shared channel (PUSCH) or a physical UL control channel (PUCCH). When a UE simultaneously transmits data information and UCI, the UE can multiplex both in a PUSCH or transmit them separately in respective PUSCH and PUCCH. UCI includes hybrid automatic repeat request acknowledgement (HARQ-ACK) information, indicating correct or incorrect detection of data transport blocks (TBs) by a UE, scheduling request (SR) indicating whether a UE has data in the UE's buffer, and CSI reports enabling a gNB to select appropriate parameters to perform link adaptation for PDSCH or PDCCH transmissions to a UE.

A CSI report from a UE can include a channel quality indicator (CQI) informing a gNB of a modulation and coding scheme (MCS) for the UE to detect a data TB with a predetermined block error rate (BLER), such as a 10% BLER, of a precoding matrix indicator (PMI) informing a gNB how to precode signaling to a UE, and of a rank indicator (RI) indicating a transmission rank for a PDSCH. UL RS includes DMRS and sounding RS (SRS). DMRS is transmitted only in a BW of a respective PUSCH or PUCCH transmission. A gNB can use a DMRS to demodulate information in a respective PUSCH or PUCCH. SRS is transmitted by a UE to provide a gNB with UL CSI and, for a TDD or a flexible duplex system, to also provide a PMI for DL transmissions. An UL DMRS or SRS transmission can be based, for example, on a transmission of a Zadoff-Chu (ZC) sequence or, in general, of a CAZAC sequence.

DL transmissions and UL transmissions can be based on an orthogonal frequency division multiplexing (OFDM) waveform including a variant using DFT precoding that is known as DFT-spread-OFDM.

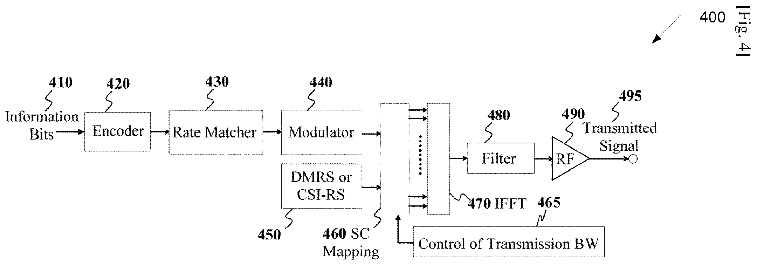

FIGURE 4 illustrates an example transmitter structure 400 using OFDM according to embodiments of the present disclosure. An embodiment of the transmitter structure 400 shown in FIGURE 4 is for illustration only. One or more of the components illustrated in FIGURE 4 can be implemented in specialized circuitry configured to perform the noted functions or one or more of the components can be implemented by one or more processors executing instructions to perform the noted functions. Other embodiments are used without departing from the scope of the present disclosure.

Information bits, such as DCI bits or data bits 410, are encoded by encoder 420, rate matched to assigned time/frequency resources by rate matcher 430 and modulated by modulator 440. Subsequently, modulated encoded symbols and DMRS or CSI-RS 450 are mapped to SCs 460 by SC mapping unit 465, an inverse fast Fourier transform (IFFT) is performed by filter 470, a cyclic prefix (CP) is added by CP insertion unit 480, and a resulting signal is filtered by filter 490 and transmitted by a radio frequency (RF) unit 495.

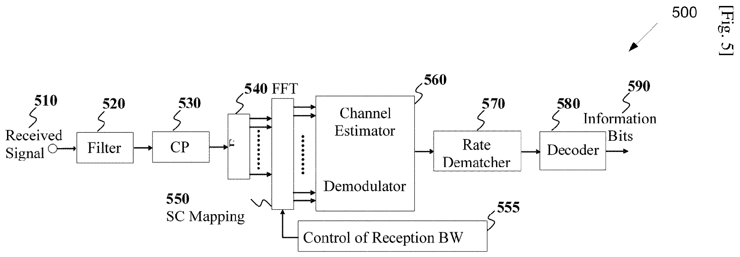

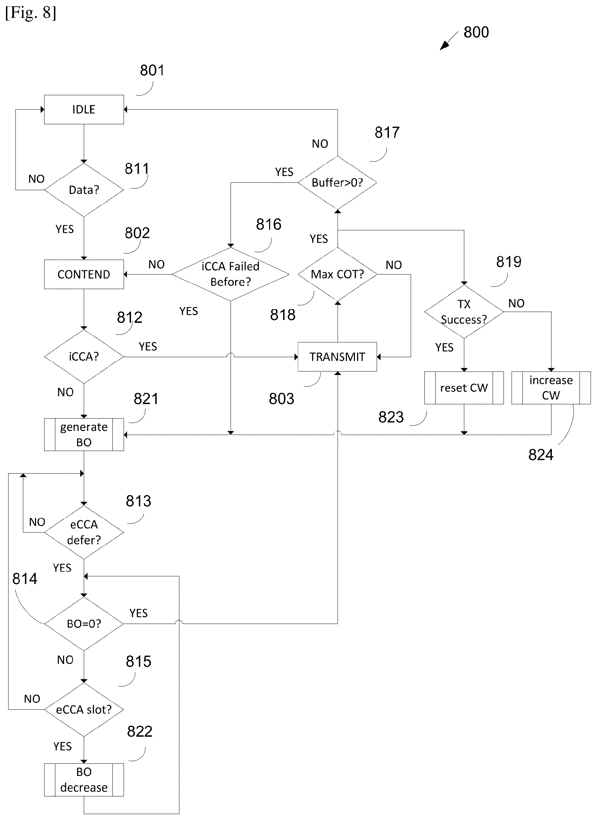

FIGURE 5 illustrates an example receiver structure 500 using OFDM according to embodiments of the present disclosure. An embodiment of the receiver structure 500 shown in FIGURE 5 is for illustration only. One or more of the components illustrated in FIGURE 8 can be implemented in specialized circuitry configured to perform the noted functions or one or more of the components can be implemented by one or more processors executing instructions to perform the noted functions. Other embodiments are used without departing from the scope of the present disclosure.

A received signal 510 is filtered by filter 520, a CP removal unit removes a CP 530, a filter 540 applies a fast Fourier transform (FFT), SCs de-mapping unit 550 de-maps SCs selected by BW selector unit 555, received symbols are demodulated by a channel estimator and a demodulator unit 560, a rate de-matcher 570 restores a rate matching, and a decoder 580 decodes the resulting bits to provide information bits 590.

A UE typically monitors multiple candidate locations for respective potential PDCCH transmissions to decode multiple candidate DCI formats in a slot. Monitoring a PDCCH candidates means receiving and decoding the PDCCH candidate according to DCI formats the UE is configured to receive. A DCI format includes cyclic redundancy check (CRC) bits in order for the UE to confirm a correct detection of the DCI format. A DCI format type is identified by a radio network temporary identifier (RNTI) that scrambles the CRC bits. For a DCI format scheduling a PDSCH or a PUSCH to a single UE, the RNTI can be a cell RNTI (C-RNTI) and serves as a UE identifier.

For a DCI format scheduling a PDSCH conveying system information (SI), the RNTI can be an SI-RNTI. For a DCI format scheduling a PDSCH providing a random-access response (RAR), the RNTI can be an RA-RNTI. For a DCI format scheduling a PDSCH or a PUSCH to a single UE prior to a UE establishing a radio resource control (RRC) connection with a serving gNB, the RNTI can be a temporary C-RNTI (TC-RNTI). For a DCI format providing TPC commands to a group of UEs, the RNTI can be a TPC-PUSCH-RNTI or a TPC-PUCCH-RNTI. Each RNTI type can be configured to a UE through higher layer signaling such as RRC signaling. A DCI format scheduling PDSCH transmission to a UE is also referred to as DL DCI format or DL assignment while a DCI format scheduling PUSCH transmission from a UE is also referred to as UL DCI format or UL grant.

A PDCCH transmission can be within a set of physical RBs (PRBs). A gNB can configure a UE one or more sets of PRBs, also referred to as control resource sets, for PDCCH receptions. A PDCCH transmission can be in control channel elements (CCEs) that are included in a control resource set. A UE determines CCEs for a PDCCH reception based on a search space such as a UE-specific search space (USS) for PDCCH candidates with DCI format having CRC scrambled by a RNTI, such as a C-RNTI, that is configured to the UE by UE-specific RRC signaling for scheduling PDSCH reception or PUSCH transmission, and a common search space (CSS) for PDCCH candidates with DCI formats having CRC scrambled by other RNTIs. A set of CCEs that can be used for PDCCH transmission to a UE define a PDCCH candidate location. A property of a control resource set is transmission configuration indication (TCI) state that provides quasi co-location information of the DMRS antenna port for PDCCH reception.

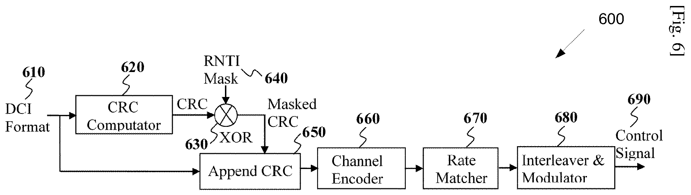

FIGURE 6 illustrates an example encoding process 600 for a DCI format according to embodiments of the present disclosure. An embodiment of the encoding process 600 shown in FIGURE 6 is for illustration only. One or more of the components illustrated in FIGURE 6 can be implemented in specialized circuitry configured to perform the noted functions or one or more of the components can be implemented by one or more processors executing instructions to perform the noted functions. Other embodiments are used without departing from the scope of the present disclosure.

A gNB separately encodes and transmits each DCI format in a respective PDCCH. A RNTI masks a CRC of the DCI format codeword in order to enable the UE to identify the DCI format. For example, the CRC and the RNTI can include, for example, 16 bits or 24 bits. The CRC of (non-coded) DCI format bits 610 is determined using a CRC computation unit 620, and the CRC is masked using an exclusive OR (XOR) operation unit 630 between CRC bits and RNTI bits 640. The XOR operation is defined as XOR (0, 0) = 0, XOR (0, 1) **= 1,** XOR (1, 0) = **1,** XOR (1, 1) = 0. The masked CRC bits are appended to DCI format information bits using a CRC append unit 650. An encoder 660 performs channel coding (such as tail-biting convolutional coding or polar coding), followed by rate matching to allocated resources by rate matcher 670. Interleaving and modulation units 680 apply interleaving and modulation, such as QPSK, and the output control signal 690 is transmitted.

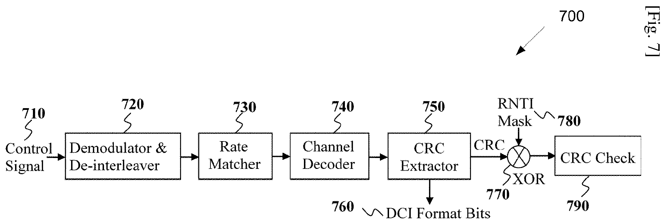

FIGURE 7 illustrates an example decoding process 700 for a DCI format for use with a UE according to embodiments of the present disclosure. An embodiment of the decoding process 700 shown in FIGURE 7 is for illustration only. One or more of the components illustrated in FIGURE 7 can be implemented in specialized circuitry configured to perform the noted functions or one or more of the components can be implemented by one or more processors executing instructions to perform the noted functions. Other embodiments are used without departing from the scope of the present disclosure.

A received control signal 710 is demodulated and de-interleaved by a demodulator and a de-interleaver 720. A rate matching applied at a gNB transmitter is restored by rate matcher 730, and resulting bits are decoded by decoder 740. After decoding, a CRC extractor 750 extracts CRC bits and provides DCI format information bits 760. The DCI format information bits are de-masked 770 by an XOR operation with an RNTI 780 (when applicable) and a CRC check is performed by unit 790. When the CRC check succeeds (checksum is zero), the DCI format information bits are considered to be valid. When the CRC check does not succeed, the DCI format information bits are considered to be invalid.

FIGURE 8 illustrates an example channel access procedure 800 according to embodiments of the present disclosure. An embodiment of the channel access procedure 800 shown in FIGURE 8 is for illustration only. FIGURE 8 does not limit a scope of the present disclosure.

In 3GPP standard specification, the downlink transmission including physical downlink shared channel (PDSCH) on a LAA carrier follows the category 4 listen-before-talk (Cat4 LBT) procedures (a flow chart is illustrated in FIGURE 8). An eNB first stays in IDLE state (step 801). Depending on whether there is data traffic (step 811) or not, the gNB transfers to CONTEND state (step 802) or stays in IDLE state (step 801), respectively. The eNB first performs initial CCA (iCCA), where the eNB senses the channel the slot durations of a defer duration (step 812). If the channel is sensed as clear in the iCCA, the gNB begins to transmit (step 803); otherwise, the gNB generates a backoff (BO) counter (step 821) and perform extended CCA (eCCA). The eNB can start transmission after BO counter achieves 0 (step 814) as in step 4, wherein the BO counter is adjusted by sensing the channel for additional slot duration(s) according to the steps below: 1) set the counter as a random number (step 821) uniformly distributed between 0 and contention window size (CWS), and go to step 4; 2) if the counter is greater than 0, and the eNB chooses to decrement the counter, decrease the counter by 1 (step 822); 3) sense the channel for an additional slot duration, and if the additional slot duration is idle, go to step 4); else, go to step 5); 4) if the counter is 0 (step 814), stop; else, go to step 2). 5) sense the channel until either a busy slot is detected within an additional defer duration or all the slots of the additional defer duration are detected to be idle (step 815); 6) if the channel is sensed to be idle during all the slot durations of the additional defer duration, go to step 4); else, go to step 5).

The eNB can keep transmitting until the maximum channel occupancy is achieved (step 818). After the transmission, if the transmission is successful, the contention window size is reset (step 823); otherwise, the contention window size is increased (step 824). If the eNB still have data traffic after transmission (step 811), the eNB keeps contending the channel (step 802); otherwise, the eNB transfers to IDLE (step 801). If the eNB has not failed any iCCA before (step 816), the eNB can perform iCCA (step 812); otherwise, the gNB may generate a BO counter (step 821) and perform eCCA (step 813).

In LTE-LAA standard specification, for transmission including physical downlink shared channel (PDSCH), or physical downlink control channel (PDCCH), or enhanced physical downlink control channel (EPDCCH), the channel access mechanism is based on LBE, which is also referred to as category-4 (CAT-4) LBT. Specifically, an LTE-LAA eNB can transmit after sensing the channel to be idle during the slot durations of a defer duration; and after the backoff counter (BO) is zero in step 4. An example of this channel access procedure is illustrated in FIGURE 8 (e.g., it is also referred to as Cat4 LBT for this type of channel access procedure).

The backoff counter is adjusted by sensing the channel for additional slot duration(s) according to the steps below: (1) set the counter as a random number uniformly distributed between 0 and contention window (CW) value, and go to step 4; (2) if the counter is greater than 0, and the eNB chooses to decrement the counter, decrease the counter by 1; (3) sense the channel for an additional slot duration, and if the additional slot duration is idle, go to step 4; else, go to step 5; (4) if the counter is 0, stop; else, go to step 2; (5) sense the channel until either a busy slot is detected within an additional defer duration or all the slots of the additional defer duration are detected to be idle; and (6) if the channel is sensed to be idle during all the slot durations of the additional defer duration, go to step 4); else, go to step 5.

In addition to the basic channel access procedure, a CWS adaptation mechanism has also been defined in LTE-LAA for alleviating transmission collisions. The CAT-4 LBT process defines 4 different channel access priority class p, with each class having a different minimum and maximum allowed CWS, as well as the corresponding maximum channel occupancy time (MCOT). If the eNB transmits transmissions that are associated with channel access priority class p on a carrier, the eNB maintains the contention window value $CW_P$ and adjusts $CW_P$ before generating the random backoff counter for the channel access procedure of next transmission.

Specifically, the following procedures are used: (step 1) for every priority class $p \in \{1,2,3,4\}$ set $CW_P$ as minimum CWS of priority class p; and (step 2) if at least Z = 80% of HARQ-ACK values corresponding to PDSCH transmission(s) in reference subframe k are determined as NACK, increase $CW_P$ for every priority class $p \in \{1,2,3,4\}$ to the next higher allowed value and remain in step 2; otherwise, go to step 1.

For LTE-LAA, the reference subframe k is the starting subframe of the most recent transmission on the carrier made by the eNB, for which at least some HARQ-ACK feedback is expected to be available. If no HARQ-ACK feedback is detected for a PDSCH transmission by the eNB, or if the eNB detects "DTX," "NACK/DTX" or "any" state, it is counted as NACK.

The CAT-4 LBT procedure similar to that of LTE-LAA can be utilized as the baseline channel access mechanism for NR unlicensed (NR-U), and the NR-U CWS adaptation can also be based on HARQ-ACK feedbacks from the UE. However, different from LTE-LAA wherein the HARQ-ACK feedback timing is fixed by specification and is 4ms in LTE-LAA, NR supports very flexible timing relation from PDSCH transmission to the related corresponding HARQ-ACK feedback. In addition, NR also supports code-block group (CBG)-based HARQ-ACK feedback compared to only the transport block (TB)-based HARQ-ACK feedback for LTE-LAA.

Also, NR supports wideband operations with each carrier can be up to 100 MHz in sub-7 GHz bands, as opposed to the 20 MHz carrier bandwidth of LTE-LAA. In addition, NR supports bandwidth part (BWP), wherein each UE can be configured with up to 4 DL BWPs and up to 4 UL BWPs, with one active DL BWP and one active UL BWP maybe activated at a given time; and the active DL/UL BWP can be switched semi-statically, semi-persistently, or dynamically through higher layer parameter, or MAC CE, or downlink control information (DCI). Due to the flexibilities and new features of NR, the CWS adaptation rule for NR-U may also be much more flexible compared to that of LTE-LAA.

In order to support the wideband operation of NR-U, the LBT for NR-U can be performed in the unit of an LBT bandwidth in the frequency domain, wherein the LBT for wideband transmissions of NR-U can be performed over multiple LBT bandwidths in parallel. For example, the LBT bandwidth for FR1 NR-U can be 20 MHz.

The present disclosure is focused on the CWS adjust rule for wideband operations of NR-U, including the CWS adjust rule when the PDSCH/PUSCH spans over multiple LBT bandwidths but only partially overlaps with one or more LBT bandwidth; and the CWS adjust rule when BWP switching happens for neighboring UL/DL transmissions.

This disclosure includes several embodiments, principles, approaches and examples that can be used in conjunction or in combination with one another, or can operate as standalone. The embodiments/principles/approaches/examples in this disclosure can be applied to FBE-based NR-U, LBE-based NR-U, or both FBE-based and LBE-based NR-U.

In the rest of this disclosure, FR1 NR-U refers to NR-U that operates in the unlicensed/shared bands in FR1, such as the 5 GHz unlicensed bands or the 6 GHz unlicensed/shared bands; and FR2 GHz NR-U refers to NR-U that operators in the unlicensed/shared bands in FR2, such as the 60 GHz unlicensed bands.

In one embodiment, enhancements to CWS adjust rule are provided when PDSCH/PUSCH partially overlaps with LBT bandwidth.

When the NR-U gNB operates on a wideband carrier, multiple parallel LBT operations can be performed over different frequency units simultaneously, such that more channel access opportunities can be achieved. When multiple parallel LBTs are performed, the multi-carrier LBT procedure of LTE-LAA can be used as baseline to apply to the parallel LBT over different frequency units of NR-U.

Specifically, type A LBT is where CAT-4 LBT is performed on different frequency units independently, with potential self-deferral to align transmissions over multiple frequency units. Furthermore, type A1 is when the back-off counter is generated independently for each frequency unit; and type A2 is when the same counter for all carriers as counter generated by carrier with largest CWS.

In addition, type B LBT is where CAT-4 LBT is performed on a reference frequency unit, and single-shot LBT of PIFS duration is performed on the other frequency units right before the Cat-4 LBT completes. Furthermore, type B1 is when a single CWS for all carriers, and CWS is updated according to HARQ-ACK across all carriers; while type B2 is when CWS is maintained independently for each carrier.

For wideband transmissions in NR-U, wideband LBT operations similar to LTE-LAA multi-carrier LBT type A and type B can be utilized. An important design consideration for the NR-U wideband LBT operation is how the frequency-domain granularity to maintain a single CWS. For example, a CWS is maintained independently on each carrier for LTE-LAA multi-carrier type A1, A2, and type B2; while a single CWS is maintained across all carriers for LTE-LAA multi-carrier type B1.

In one example, within the carrier bandwidth, the CWS can be jointly determined and maintained on a per-CWS bandwidth basis, such that a single CWS is determined and maintained for a CWS bandwidth within the carrier bandwidth, and potentially different CWS can be maintained for different CWS bandwidths within the carrier bandwidth; i.e., CWS bandwidth is the frequency-domain granularity wherein a single CWS is maintained for NR-U wideband operation.

In one example, the CWS bandwidth is one LBT bandwidth, such that the CWS for NR-U wideband LBT operation can be maintained on a per LBT bandwidth basis.

For wideband transmissions in NR-U, wideband LBT operations similar to LTE-LAA multi-carrier LBT type A and type B can be utilized. An important design consideration for the NR-U wideband LBT operation is how the frequency-domain granularity to maintain a single CWS. For example, a CWS is maintained independently on each carrier for LTE-LAA multi-carrier type A1, A2, and type B2; while a single CWS is maintained across all carriers for LTE-LAA multi-carrier type B1.

In one example, within the carrier bandwidth, the CWS can be jointly determined and maintained on a per-CWS bandwidth basis, such that a single CWS is determined and maintained for a CWS bandwidth within the carrier bandwidth, and potentially different CWS can be maintained for different CWS bandwidths within the carrier bandwidth; i.e., CWS bandwidth is the frequency-domain granularity wherein a single CWS is maintained for NR-U wideband operation.

In one example, the CWS bandwidth is one LBT bandwidth, such that the CWS for NR-U wideband LBT operation can be maintained on a per LBT bandwidth basis.

In one sub-example, this can be applied to CWS for downlink transmissions, wherein the LBT bandwidth is the LBT bandwidth that is contained within the carrier bandwidth.

In another sub-example, this can be applied to CWS for uplink transmissions, wherein the LBT bandwidth can refer to the LBT bandwidth that overlaps with the scheduled PUSCH for the UE.

In another sub-example, this can be applied to CWS for uplink transmissions, wherein the LBT bandwidth can refer to the LBT bandwidth that overlaps with the current active uplink BWP for the UE.

In another sub-example, this can be applied to CWS for uplink transmissions, wherein the LBT bandwidth can refer to the LBT bandwidth that overlaps with the configured uplink BWPs for the UE.

In one example, the CWS bandwidth is the carrier bandwidth, such that the CWS for NR-U wideband LBT operation can be maintained on a per carrier bandwidth basis.

In one sub-example, this can be applied to CWS for downlink transmissions

In another sub-example, this can be applied to CWS for uplink transmission, if the UE can support the entire range of the carrier bandwidth.

In one example, the CWS bandwidth is a BWP, such that the CWS for NR-U wideband LBT operation can be maintained on a per BWP basis.

In one sub-example, this can be applied to CWS for downlink transmissions, wherein the BWP can be active DL BWP for scheduled UEs associated with the gNB.

In another sub-example, this can be applied to CWS for uplink transmission, wherein the BWP is the current active UL BWP for the UE.

In another sub-example, this can be applied to CWS for uplink transmission, wherein the BWP is a configured UL BWP for the UE. For instance, UE can maintain a CWS for each configured UL BWP associated with the UE.

In one example, the CWS bandwidth is a set of LBT bandwidths, such that the CWS for NR-U wideband LBT operation can be maintained on a set of LBT bandwidths basis, wherein the set of LBT bandwidths can be a set of contiguous or non-contiguous LBT bandwidths.

In one sub-example, this example can be applied to CWS for downlink transmissions.

In another sub-example, this example can be applied to CWS for uplink transmission.

In one example, when a NR-U gNB/UE starts to perform a new CAT-4 LBT procedure to initialize a DL/UL transmission on a CWS bandwidth, e.g. at NR-U slot with index n, the gNB/UE identifies a set of HARQ-ACK values corresponding to previous DL/UL transmission(s) in a set of reference time-domain and frequency-domain resources, wherein the set of HARQ-ACK values corresponding to the set of reference time-domain and frequency-domain resources maybe used in the rule of determining whether the gNB/UE increases the CWS value or resets the CWS value corresponding the current CWS bandwidth.

In one sub-example, the reference time-domain and frequency-domain (T/F) resources for CW adjustment on a CWS bandwidth can be a determined set of slot(s) and/or mini-slot(s) and/or partial slot(s) of a determined previous transmission burst on the CWS bandwidth, wherein the details for the determination of the reference T/F resources and the CWS adjust rules can be referred to NR specification.

In one example, the configuration for the CWS bandwidth according to the aforementioned example and/or embodiment can be one of fixed in the specification, semi-statically configured by higher layer parameter (e.g., RRC parameter), dynamically configured by DCI, or configured through MAC CE.

In one example, the CWS bandwidth and the frequency domain granularity wherein an LBT process is performed for wideband LBT of NR-U can potentially be different.

For instance, the frequency domain granularity for LBT process for wideband LBT of NR-U can be an LBT bandwidth, while the CWS bandwidth can be chosen according to one of the aforementioned examples.

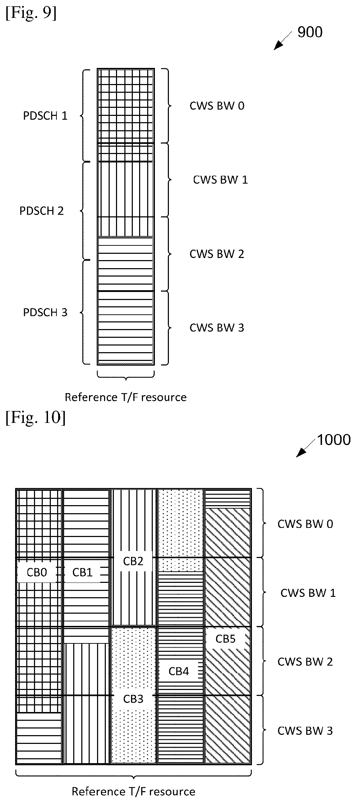

FIGURE 9 illustrates an example CWS bandwidth 900 according to embodiments of the present disclosure. An embodiment of the CWS bandwidth 900 shown in FIGURE 9 is for illustration only. One or more of the components illustrated in FIGURE 9 can be implemented in specialized circuitry configured to perform the noted functions or one or more of the components can be implemented by one or more processors executing instructions to perform the noted functions. Other embodiments are used without departing from the scope of the present disclosure.

For wideband operations in NR-U, the gNB scheduler has enough flexibility, such that a scheduled downlink or uplink transmission for NR-U could span over multiple CWS bandwidths and could partially overlap with one or multiple CWS bandwidths. One illustration of this scenario is provided in FIGURE 9, wherein PDSCH 1, PDSCH 2 and PDSCH 3 are all partially overlapping with at least one CWS BW, and as a result CWS BW1 includes both a subset of PDSCH1 and a subset of PDSCH2, while CWS BW2 includes both a subset of PDSCH2 and PDSCH 3.

One design consideration is when a CWS BW includes at least one scheduled PDSCH/PUSCH transmission that only partially overlaps with the CWS BW (i.e., only a subset of the PDSCH/PUSCH is within the CWS BW) on the reference T/F resource for the CWS BW, how to utilize the HARQ-ACK feedback(s) corresponding to such partially overlapped PDSCH/PUSCH in adjusting the CWS of current HARQ-ACK. In the example of FIGURE 9, this refers to how to update the CWS for CWS BW0 to CWS BW3 respectively.

In one embodiment, he HARQ-ACK feedback(s) of a PDSCH/PUSCH can be utilized in adjusting the CWS corresponding to a CWS BW as long as the PDSCH/PUSCH overlaps with the CWS BW in frequency domain.

In one example, the aforementioned example and/or embodiment can be applied irrespective if the HARQ-ACK feedback is TB-based or CBG-based.

In one example, the aforementioned example and/or embodiment can be applied only when the HARQ-ACK feedback is TB-based.

In one example, the aforementioned example and/or embodiment can be applied only when the HARQ-ACK feedback is CBG-based.

In one example, the same HARQ-ACK bit corresponding to the PDSCH/PUSCH on the reference time and frequency resource is allowed to be utilized more than once in adjusting the CWS for different CWS BWs.

In one sub-example, for each CWS BW, the same ACK/NACK bit corresponding to the PDSCH/PUSCH on the reference time and frequency resource could be only used at up to one-time instance in adjusting the CWS for the CWS BW.

As illustrated in FIGURE 9, the CWS adjust decision for CWS BW0 may depend on the HARQ-ACK feedback(s) corresponding to PDSCH1; the CWS adjust decision for CWS BW1 may depend on the HARQ-ACK feedback(s) corresponding to PDSCH1 and PDSCH2; the CWS adjust decision for CWS BW2 may depend on the HARQ-ACK feedback(s) corresponding to PDSCH2 and PDSCH3; and the CWS adjust decision for CWS BW3 may depend on the HARQ-ACK feedback(s) corresponding to PDSCH3.

In one embodiment, when CBG-based HARQ-ACK feedback is used, the HARQ-ACK feedback(s) corresponding to the CBG(s) of the PDSCH/PUSCH can be utilized in adjusting the CWS corresponding to a CWS BW as long as the CBG overlaps with the CWS BW in frequency domain.

In one example, the same HARQ-ACK bit corresponding to the CBG(s) of the PDSCH/PUSCH on the reference time and frequency resource is allowed to be utilized more than once in adjusting the CWS for different CWS BWs.

In one sub-example, for each CWS BW, the same ACK/NACK bit corresponding to the CBG(s) of the PDSCH/PUSCH PDSCH/PUSCH on the reference time and frequency resource could be only used at up to one time instance in adjusting the CWS for the CWS BW.

FIGURE 10 illustrates another example CWS bandwidth 1000 according to embodiments of the present disclosure. An embodiment of the CWS bandwidth 1000 shown in FIGURE 10 is for illustration only. One or more of the components illustrated in FIGURE 10 can be implemented in specialized circuitry configured to perform the noted functions or one or more of the components can be implemented by one or more processors executing instructions to perform the noted functions. Other embodiments are used without departing from the scope of the present disclosure.

As illustrated in FIGURE 10, the PDSCH of a TB spans across CWS BW0 to CWS BW3, and there are 6 CBGs in the TB wherein each CBG consists of one CB. Since each CBG spans over CWS BW0, CWS BW1, CWS BW2, and CWS BW3; the CWS adjust decision for CWS BW0, CWS BW1, CWS BW2, and CWS BW3 may depend on the HARQ-ACK feedback bits for every CBG/CB (i.e., HARQ-ACK for CB0, CB1, CB2, CB3, CB4, and CB5).

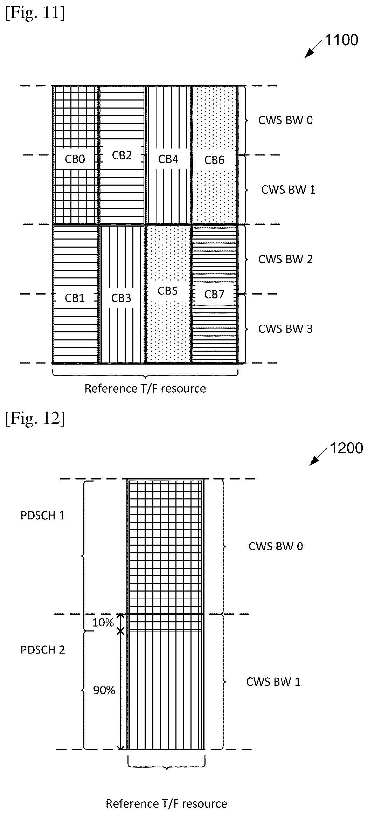

FIGURE 11 illustrates yet another example CWS bandwidth 1100 according to embodiments of the present disclosure. An embodiment of the CWS bandwidth 1100 shown in FIGURE 11 is for illustration only. One or more of the components illustrated in FIGURE 11 can be implemented in specialized circuitry configured to perform the noted functions or one or more of the components can be implemented by one or more processors executing instructions to perform the noted functions. Other embodiments are used without departing from the scope of the present disclosure.

As illustrated in FIGURE 11, the PDSCH of a TB spans across CWS BW0 to CWS BW3, and there are 8 CBGs in the TB wherein each CBG consists of one CB. The CWS adjust decision for CWS BW0 and CWS BW1 may depend on the HARQ-ACK feedback bits corresponding to CGB0 (i.e., CB0), CGB2 (i.e., CB2), CGB4 (i.e., CB4), CGB6 (i.e., CB6); and CWS adjust decision for CWS BW2 and CWS BW3 may depend on the HARQ-ACK feedback bits corresponding to CGB 1 (i.e., CB1), CGB3 (i.e., CB3), CGB5 (i.e., CB5), CGB7 (i.e., CB7).

In one embodiment, the HARQ-ACK feedback(s) of a PDSCH/PUSCH can be utilized in adjusting the CWS corresponding to a CWS BW if the PDSCH/PUSCH is fully contained within the CWS BW in frequency domain.

In one example, the HARQ-ACK feedback(s) of a PDSCH/PUSCH in the reference T/F resource that partially overlaps (but not fully contained) with the CWS BW may not be utilized for CWS adjust under this approach.

In one embodiment, when CBG-based HARQ-ACK feedback is used, the HARQ-ACK feedback(s) corresponding to the CBG(s) of the PDSCH/PUSCH can be utilized in adjusting the CWS corresponding to a CWS BW if the CBG is fully contained within the CWS BW in frequency domain.

In one example, the HARQ-ACK feedback(s) of a CBG (of a PDSCH/PUSCH in the reference T/F resource) that partially overlaps (but not fully contained) with the CWS BW may not be utilized for CWS adjust under this approach.

In one example, the HARQ-ACK feedback(s) of a PDSCH/PUSCH can be utilized in adjusting the CWS corresponding to a CWS BW if the fraction of the bandwidth of the PDSCH/PUSCH overlapped the CWS BW over the bandwidth of the CWS BW is at least threshold $\eta$ (0<= $\eta$ <=1).

In one example, if the fraction of the bandwidth of the PDSCH/PUSCH overlapped the CWS BW over the bandwidth of the CWS BW is below threshold $\eta$ (0<= $\eta$ <=1), the HARQ-ACK feedback(s) of a PDSCH/PUSCH may not be utilized in adjusting the CWS corresponding to a CWS BW.

In one example, the aforementioned example and/or embodiments can be applied irrespective if the HARQ-ACK feedback is TB-based or CBG-based.

In one example, the aforementioned example and/or embodiments can be applied only when the HARQ-ACK feedback is TB-based.

In one example, the aforementioned example and/or embodiments can be applied only when the HARQ-ACK feedback is CBG-based.

In one example, the bandwidth of the PDSCH/PUSCH refers to the bandwidth of the TB corresponding to the PDSCH/PUSCH.

In one example, the threshold $\eta$ can be one of fixed in the specification, or configured higher layer parameter, or dynamically configured by DCI.

In an illustration of the aforementioned embodiment and/or example, for the example in FIGURE , if $\eta$ = 50%, the CWS adjust decision for CWS BW0 may depend on the HARQ-ACK feedback(s) corresponding to PDSCH1; the CWS adjust decision for CWS BW1 may depend on the HARQ-ACK feedback(s) corresponding to only PDSCH2 (not including PDSCH1); the CWS adjust decision for CWS BW2 may depend on the HARQ-ACK feedback(s) corresponding to only PDSCH3 (not including PDSCH2); and the CWS adjust decision for CWS BW3 may depend on the HARQ-ACK feedback(s) corresponding to PDSCH3.

In one embodiment, when CBG-based HARQ-ACK feedback is used, the HARQ-ACK feedback(s) corresponding to the CBG(s) of the PDSCH/PUSCH can be utilized in adjusting the CWS corresponding to a CWS BW if the fraction of the bandwidth of the CBG that is overlapped the CWS BW over the bandwidth of the CWS BW is at least threshold $\eta$ (0<= $\eta$ <=1).

In one example, if the fraction of the bandwidth of the CBG that is overlapped the CWS BW over the bandwidth of the CWS BW is below threshold $\eta$ (0<= $\eta$ <=1), the HARQ-ACK feedback(s) ) corresponding to the CBG(s) of the PDSCH/PUSCH may not be utilized in adjusting the CWS corresponding to a CWS BW.

In one example, the threshold $\eta$ can be one of fixed in the specification, or configured higher layer parameter, or dynamically configured by DCI.

In an illustration of the aforementioned embodiment and/or example, in the example of FIGURE 10, the PDSCH of a TB spans across CWS BW0 to CWS BW3, and there are 6 CBGs in the TB wherein each CBG consists of one CB. If the threshold $\eta$ = 50%, the CWS adjust decision for CWS BW0 may depend on the HARQ-ACK feedback bits for every CBG/CB #0, #1, #2, #3 and #5; the CWS adjust decision for CWS BW1 may depend on the HARQ-ACK feedback bits for every CBG/CB #0, #1, #2, #4 and #5; the CWS adjust decision for CWS BW2 may depend on the HARQ-ACK feedback bits for every CBG/CB #0, #2, #3, #4 and #5; the CWS adjust decision for CWS BW3 may depend on the HARQ-ACK feedback bits for every CBG/CB #1, #2, #3, #4 and #5.

In one embodiment, the HARQ-ACK feedback(s) of a PDSCH/PUSCH can be utilized in adjusting the CWS corresponding to a CWS BW if the fraction of the bandwidth of the PDSCH/PUSCH overlapped the CWS BW over the bandwidth of the PDSCH/PUSCH is at least threshold $\eta$ (0<= $\eta$ <=1).

In one embodiment, the HARQ-ACK feedback(s) corresponding to the CBG(s) of the PDSCH/PUSCH can be utilized in adjusting the CWS corresponding to a CWS BW if the fraction of the bandwidth of the CBG that is overlapped the CWS BW over the bandwidth of the CBG is at least threshold $\eta$ (0<= $\eta$ <=1).

In one embodiment, for a CWS BW, the ACK/NACK bit of a TB or CBG corresponding to the PDSCH/PUSCH transmission of the reference T/F domain resource that may be utilized for the CWS adjust decision on current CWS BW, may have a higher weight in adjusting the CWS for the CWS BW as the fraction of the bandwidth of the TB or CBG of the PDSCH/PUSCH overlapped with the CWS BW over the bandwidth of the CWS BW increases.

In one example, the CWS adjust rule for a CWS BW can be based on a weighted average fraction of ACK/NACK bits of the ACK/NACK bits that may be utilized in adjusting the CWS, such that the CWS is reset to minimum if the weighted average fraction is below (or above) a given threshold, and increased to next allowed value if the fraction is above (or below) the threshold.

In one example, the weight for an ACK/NACK bit of a TB or CBG corresponding to the PDSCH/PUSCH transmission of the reference T/F domain resource that may be utilized for the CWS adjust decision on current CWS BW can be $BW_{overlap}$ / $BW_{CWS}$, wherein $BW_{overlap}$ is the overlapped (i.e., intersection of the) BW of the TB or CBG with the current CWS BW, while $BW_{CWS}$ is the CWS BW.

FIGURE 12 illustrates an example CWS bandwidth and PDSCH 1200 according to embodiments of the present disclosure. An embodiment of the CWS bandwidth and PDSCH 1200 shown in FIGURE 12 is for illustration only. One or more of the components illustrated in FIGURE 12 can be implemented in specialized circuitry configured to perform the noted functions or one or more of the components can be implemented by one or more processors executing instructions to perform the noted functions. Other embodiments are used without departing from the scope of the present disclosure.

As illustrated in FIGURE 12, if the HARQ-ACK feedback for PDSCH1 is ACK, the HARQ-ACK feedback for PDSCH2 is NACK, and $\dfrac{BW_{PDSCH1} \cap CWSBW1}{BW_{CWSBW1}} = 10\%$ and $\dfrac{BW_{PDSCH2} \cap CWSBW1}{BW_{CWSBW1}} = 90\%$; thus the weighted average fraction of NACK bits corresponding to CWS BW1 is CWS BW1 is $10\% \times 0(ACK) + 90\% \times 1(NACK) = 90\%$. If the threshold is 80% same as LTE-LAA, the CWS corresponding to CWS BW1 may be increased to the next allowable value. By contrast, if an equal weight is used similar to LTE-LAA, the fraction of NACK bits is 50%, and the CWS for CWS BW1 may reset to minimum value, which does not accurately reflect the collision condition on CWS BW1 since 90% of CWS BW1 is NACK'ed.

In one embodiment, for a CWS BW, the ACK/NACK bit of a TB or CBG corresponding to the PDSCH/PUSCH transmission of the reference T/F domain resource that may be utilized for the CWS adjust decision on current CWS BW, may have a higher weight in adjusting the CWS for the CWS BW as the fraction of the bandwidth of the TB or CBG of the PDSCH/PUSCH overlapped with the CWS BW over the bandwidth of the TB or CBG increases.

In one embodiment, enhancements to CWS adjust rule with BWP switching are provided.

In NR, each UE can be configured with up to 4 DL BWPs and up to 4 UL BWPs, wherein at each time a single active DL BWP and a single active UL BWP is configured. The active DL/UL BWP can be switched over time, such as through DCI for a dynamic BWP switching or through RRC for a semi-static BWP switching.

In one embodiment, a single active DL/UL BWP can be supported by an NR-U UE at a given time, and this active DL/UL BWP can be switched to another configured DL/UL BWP for NR-U UE.

In one example, all or a subset of the methods for active BWP switching from Rel-15 NR can be supported for NR-U, wherein the BWP switching methods include semi-statically switching through higher layer parameter, semi-persistently switching through MAC CE, or dynamically switching through DCI.

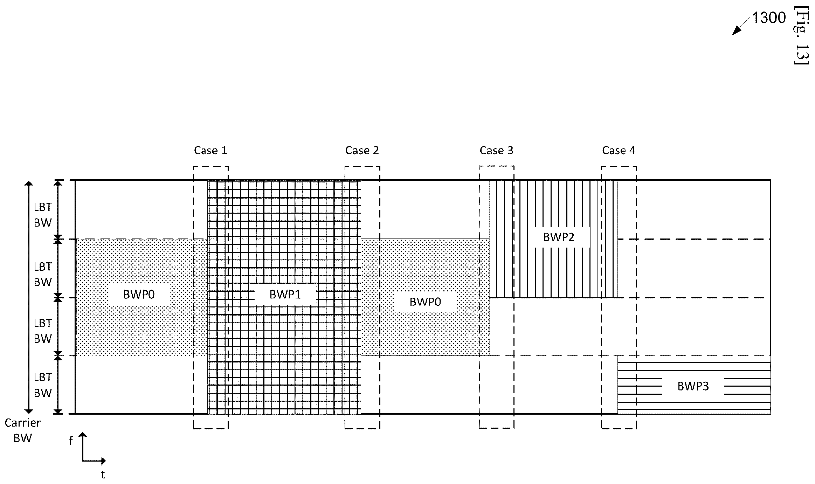

In NR-U, when an active UL/DL BWP needs to be switched, in order to transmit on the new active UL/DL BWP, the UE/gNB needs to first determine the CWS corresponding to the new active UL/DL BWP, based on which the UE/gNB can generate the random back-off counter for the CAT-4 LBT process. However, as illustrated in FIGURE 13, the new active UL/DL BWP and the previous active UL/DL BWP may share different frequency resource.

FIGURE 13 illustrates an example active BWP switching 1300 according to embodiments of the present disclosure. An embodiment of the active BWP switching 1300 shown in FIGURE 13 is for illustration only. One or more of the components illustrated in FIGURE 13 can be implemented in specialized circuitry configured to perform the noted functions or one or more of the components can be implemented by one or more processors executing instructions to perform the noted functions. Other embodiments are used without departing from the scope of the present disclosure.

In one embodiment, the following cases are possible regarding the relation of the frequency domain resource for the new active BWP and the frequency domain resource for the previous active BWP at BWP switching.

In one example of case1, the frequency domain resource for the new active BWP fully contains the frequency domain resource for the previous active BWP. In the example of FIGURE 13, case 1 happens when active BWP switches from BWP0 to BWP1.

In one example of case2, the frequency domain resource for the new active BWP is fully contained within the frequency domain resource for the previous active BWP. In the example of FIGURE 13, case 2 happens when active BWP switches from BWP1 to BWP0.

In one example of case 3, the frequency domain resource for the new active BWP is partially overlapped with the frequency domain resource for the previous active BWP, and both the new active BWP and the previous active BWP have non-empty frequency resources after excluding the common frequency resources shared by the two BWPs. In the example of FIGURE 13, case 3 happens when active BWP switches from BWP0 to BWP2.

In one example of case 4, the frequency domain resource for the new active BWP and the frequency domain resource for the previous active BWP do not share any overlapped frequency-domain resource. In the example of FIGURE 13, case 4 happens when active BWP switches from BWP2 to BWP3.

When a UE is configured to switch to the new active UL BWP, and before the first transmission on the new active UL BWP, the UE needs to determine CWS. However, since the most recent UE transmission was on the previous active UL BWP, an import design consideration is how to decide the CWS for the first transmission on the new active UL BWP, or equivalently the CWS adjust rule when BWP switching happens.

In one embodiment, after the active BWP switches from a previous active BWP to a new active BWP, the CWS for the new active BWP can be determined based on all or a subset of the HARQ-ACK feedbacks corresponding to the transmission(s) on the most recent reference T/F resources of the previous active BWP.

In one example, the aforementioned example and/or embodiment can be applied to all or only a subset of the configurations for the CWS bandwidth (i.e., the frequency-domain granularity wherein a single CWS is maintained for NR-U wideband operation), wherein the CWS bandwidth can be configured as one of the LBT bandwidth, carrier bandwidth, BWP, or a set of LBT bandwidths according to the aforementioned embodiment.

In a sub-example, this approach can be applied to when the CWS bandwidth is the carrier bandwidth, such that the HARQ-ACK feedbacks corresponding to the transmission(s) on the most recent reference T/F resources of the previous active BWP can be used in adjusting for the CWS which is maintained as a single CWS across the entire carrier bandwidth.

In one example, the aforementioned embodiment and/or example can be applied to all or only a subset of Case 1, Case 2, Case 3 and Case 4 defined in the aforementioned embodiment and/or example regarding the relationship between the new active BWP and the previous active BWP.

In one embodiment, the aforementioned embodiment and/or example can be applied to when the HARQ-ACK feedback for last transmission on the reference T/F resource on the previous active BWP is one of either TB-based or CBG-based, TB-based only, and CBG-based only.

In one embodiment, the aforementioned embodiment and/or example can be applied under all or only a subset of the combinations of factors including the CWS bandwidth configuration, the frequency relation between the new active BWP and previous active BWP (i.e., Case 1 to Case 4), and whether the HARQ-ACK feedback for last transmission on the reference T/F resource on the previous active BWP is TB-based or CBG-based.

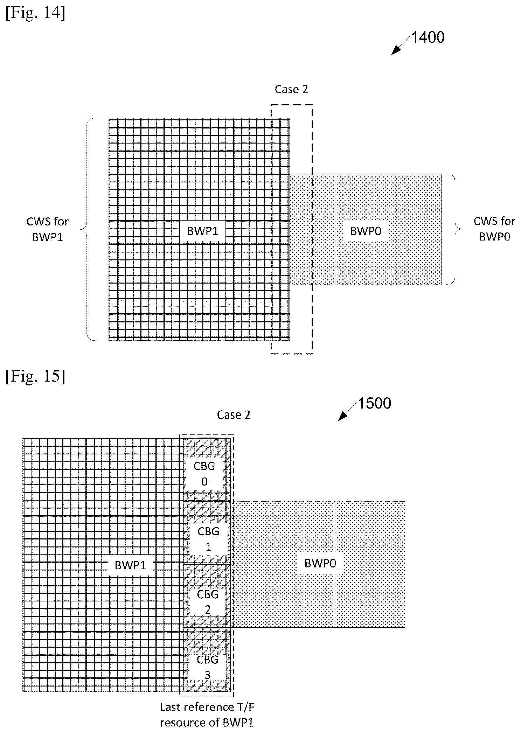

In one sub-example, this approach can be applied for Case 2, and when the CWS bandwidth is configured as the carrier bandwidth or the BWP. For instance, when CWS bandwidth is the BWP, the HARQ-ACK feedbacks corresponding to the transmission(s) on the most recent reference T/F resources of the previous active BWP can be utilized in determining the CWS corresponding to the previous active BWP, which contains the new active BWP under Case 2. As a result, it is reasonable to apply this approach under such scenario. An illustration of this example is provided in FIGURE 14.

FIGURE 14 illustrates an example CWS for BWP 1400 according to embodiments of the present disclosure. An embodiment of the CWS for BWP 1400 shown in FIGURE 14 is for illustration only. One or more of the components illustrated in FIGURE 14 can be implemented in specialized circuitry configured to perform the noted functions or one or more of the components can be implemented by one or more processors executing instructions to perform the noted functions. Other embodiments are used without departing from the scope of the present disclosure.

In another sub-example, the aforementioned embodiment and/or example can be applied when the CBG-based HARQ-ACK feedback is used for the last reference T/F resource of previous active BWP, such that the CWS for the first transmission on the new active BWP can be determined based on the HARQ-ACK feedbacks of the CBG(s) on the last reference T/F resource of the previous active BWP CWS bandwidth, wherein such CBG(s) share overlapped frequency resources with the new active BWP.

FIGURE 15 illustrates an example BWP and CBG 1500 according to embodiments of the present disclosure. An embodiment of the BWP and CBG 1500 shown in FIGURE 15 is for illustration only. One or more of the components illustrated in FIGURE 15 can be implemented in specialized circuitry configured to perform the noted functions or one or more of the components can be implemented by one or more processors executing instructions to perform the noted functions. Other embodiments are used without departing from the scope of the present disclosure.

An illustration of this sub-example is provided in FIGURE 15, wherein the CWS for the initial transmission on BWP0 can be determined based on the HARQ-ACK feedback(s) corresponding to the CBG1 and CBG2 of the last reference T/F resource of BWP1.

In one embodiment, the aforementioned embodiment and/or example can be applied when the previous active BWP and the new active BWP share the same frequency resources.

In one embodiment, after the active BWP switches from a previous active BWP to a new active BWP, the CWS for the new active BWP can be determined based on all or a subset of the HARQ-ACK feedbacks corresponding to the transmission(s) on the most recent reference T/F resources of the current active BWP.

In one example, the aforementioned embodiment and/or example can be applied to all or only a subset of the configurations for the CWS bandwidth (i.e., the frequency-domain granularity wherein a single CWS is maintained for NR-U wideband operation), wherein the CWS bandwidth can be configured as one of the LBT bandwidth, carrier bandwidth, BWP, or a set of LBT bandwidths according to the aforementioned embodiment.

In one sub-example, this approach can be applied irrespective of the CWS bandwidth configuration.

In one example, the aforementioned embodiment and/or example can be applied to all or only a subset of Case 1, Case 2, Case 3 and Case 4 defined in the aforementioned embodiment and/or example regarding the frequency relationship between the new active BWP and the previous active BWP.

In one sub-example, this approach can be applied irrespective of the frequency relationship between the new active BWP and the previous active BWP.

*203In one example, the aforementioned embodiment and/or example can be applied under all or only a subset of the combinations of factors including the CWS bandwidth configuration, the frequency relation between the new active BWP and previous active BWP (i.e., Case 1 to Case 4).

In one example, this approach can be applied if the time gap between the most recent/latest reference T/F resources of the current active BWP and the expected start of the initial transmission on the current active BWP (after previous active BWP is switched to current active BWP) is within a threshold; otherwise one of the other approaches of this embodiment can be applied.

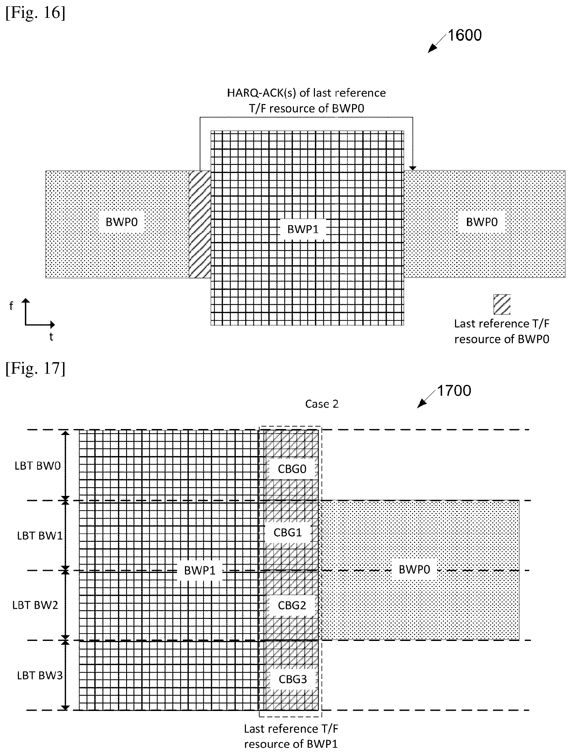

FIGURE 16 illustrates an example BWP 1600 according to embodiments of the present disclosure. An embodiment of the BWP 1600 shown in FIGURE 16 is for illustration only. One or more of the components illustrated in FIGURE 16 can be implemented in specialized circuitry configured to perform the noted functions or one or more of the components can be implemented by one or more processors executing instructions to perform the noted functions. Other embodiments are used without departing from the scope of the present disclosure.

An illustration of the aforementioned embodiment and/or example is provided in FIGURE 16, wherein after the active BWP is switched from BWP1 to BWP0, the CWS for the initial transmission on BWP0 can be based on the HARQ-ACK feedbacks of the last reference T/F resource on BWP0.

In one embodiment, after the active BWP switches from a previous active BWP to a new active BWP, the CWS for an LBT BW on the new active BWP can be determined based on all or a subset of the HARQ-ACK feedbacks corresponding to the transmission(s) on the most recent reference T/F resources of this LBT BW.

In one example, the aforementioned embodiment and/or example can be applied to when the CWS bandwidth (i.e., the frequency-domain granularity wherein a single CWS is maintained for NR-U wideband operation) is configured as the LBT bandwidth.

In one example, the aforementioned embodiment and/or example can be applied to all or only a subset of Case 1, Case 2, Case 3 and Case 4 defined in the aforementioned embodiment and/or example regarding the relationship between the new active BWP and the previous active BWP.

In one example, the aforementioned embodiment and/or example can be applied to when the HARQ-ACK feedback for last transmission on the reference T/F resource on the previous active BWP is one of either TB-based or CBG-based, TB-based only, and CBG-based only.

In one example, the aforementioned embodiment and/or example can be applied under all or only a subset of the combinations of factors including the frequency relation between the new active BWP and previous active BWP (i.e., Case 1 to Case 4), and whether the HARQ-ACK feedback for last transmission on the reference T/F resource on the previous active BWP is TB-based or CBG-based.

FIGURE 17 illustrates an example BWP and CBG 1700 according to embodiments of the present disclosure. An embodiment of the BWP and CBG 1700 shown in FIGURE 17 is for illustration only. One or more of the components illustrated in FIGURE 17 can be implemented in specialized circuitry configured to perform the noted functions or one or more of the components can be implemented by one or more processors executing instructions to perform the noted functions. Other embodiments are used without departing from the scope of the present disclosure.

As illustrated in FIGURE 17, CWS for the initial transmission on LBT BW1 of the BWP0 can be determined based on the HARQ-ACK feedback(s) corresponding to the CBG1 of the last reference T/F resource of BWP1; while CWS for the initial transmission on LBT BW2 of the BWP0 can be determined based on the HARQ-ACK feedback(s) corresponding to the CBG2 of the last reference T/F resource of BWP1.

In one embodiment, after the active BWP switches from a previous active BWP to a new active BWP, the CWS for the new active BWP can be determined as the default CWS value that corresponds to the corresponding channel access priority class for the prospective transmission on the new active BWP.

In one example, the aforementioned embodiment and/or example can be applied to all or only a subset of the configurations for the CWS bandwidth (i.e., the frequency-domain granularity wherein a single CWS is maintained for NR-U wideband operation), wherein the CWS bandwidth can be configured as one of the LBT bandwidth, carrier bandwidth, BWP, or a set of LBT bandwidths according to the aforementioned embodiment.

In one sub-example, this approach can be applied irrespective of the CWS bandwidth configuration.

In one example, the aforementioned embodiment and/or example can be applied to all or only a subset of Case 1, Case 2, Case 3 and Case 4 defined in the aforementioned embodiment and/or example regarding the frequency relationship between the new active BWP and the previous active BWP.

In one sub-example, this approach can be applied irrespective of the frequency relationship between the new active BWP and the previous active BWP.

*219In one example, the aforementioned embodiment and/or example can be applied to when the HARQ-ACK feedback for last transmission on the reference T/F resource on the previous active BWP is one of either TB-based or CBG-based, TB-based only, and CBG-based only.

In one example, the default CWS value corresponding to the channel access priority class for the prospective transmission on the new active BWP can be the minimum contention window size corresponding to the channel access priority class.

In one example, the default CWS value corresponding to the channel access priority class for the prospective transmission on the new active BWP can be chosen from one of allowed contention window sizes corresponding to the channel access priority class.

In one embodiment, after the active UL/DL BWP switches from a previous active UL/DL BWP to a new active BWP, if the initial transmission on the new active UL/DL BWP overlaps with the frequency resources of the DL/UL COT initiated by a gNB/UE, the initial transmissions on new active UL/DL BWP can be transmitted after successful CAT-2 LBT over the frequency resources that overlaps with the frequency resources of the DL/UL COT initiated by the gNB/UE.

In one example, the aforementioned embodiment and/or example can be applied to all or only a subset of the configurations for the CWS bandwidth (i.e., the frequency-domain granularity wherein a single CWS is maintained for NR-U wideband operation), wherein the CWS bandwidth can be configured as one of the LBT bandwidth, carrier bandwidth, BWP, or a set of LBT bandwidths according to the aforementioned embodiment.

In one example, multiple CAT-2 LBT processes can be performed in parallel when the frequency domain granularity for an LBT process is smaller than the overlapped frequency resources between the new active UL/DL BWP and the frequency resources that overlaps with the frequency resources of the DL/UL COT initiated by a gNB/UE.

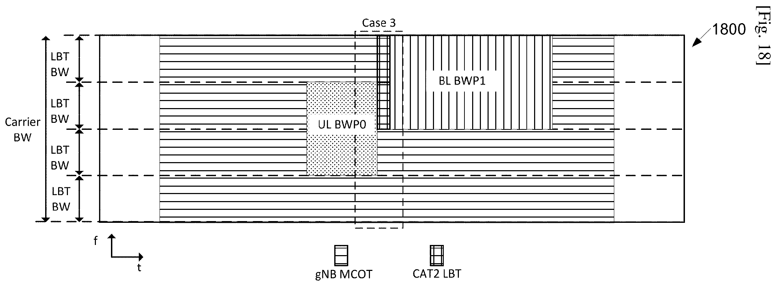

An illustration of this approach is provided in FIGURE 18, wherein the UE switches from UL BWP0 to UL BWP1, and the UL BWP1 is within a gNB COT, as a result the UE can initialize transmissions on UL BWP1 if any of the two parallel CAT-2 LBTs each performed over an LBT BW has passed.

FIGURE 18 illustrates an example UL BWP in carrier BW 1800 according to embodiments of the present disclosure. An embodiment of the UL BWP in carrier BW 1800 shown in FIGURE 18 is for illustration only. One or more of the components illustrated in FIGURE 18 can be implemented in specialized circuitry configured to perform the noted functions or one or more of the components can be implemented by one or more processors executing instructions to perform the noted functions. Other embodiments are used without departing from the scope of the present disclosure.

In one embodiment, after the active BWP switches from a previous active BWP to a new active BWP, the aforementioned embodiment and/or example can be utilized to determine the CWS for the new active BWP, wherein the selected approach can depend on the overlapped frequency resource between the previous active BWP and the new active BWP.

In one example, if the fraction of the bandwidth of the overlapped frequency resource between the previous active BWP and the new active BWP over the bandwidth of the previous active BWP is above a threshold, one of the aforementioned embodiment and/or example can be applied.

In one example, if the fraction of the bandwidth of the overlapped frequency resource between the previous active BWP and the new active BWP over the bandwidth of the newly active BWP is above a threshold, the aforementioned embodiment and/or example can be applied.

In one embodiment, enhancements to UL CWS adjust rule with switching of PUSCH frequency resource are provide.

In NR-U, the PUSCH transmission can be based on the interlaced structure to meet the occupied channel bandwidth (OCB) regulation, wherein the PUSCH may occupy at least 80% of the nominal channel bandwidth of unlicensed band. In addition, to support wideband operation in NR-U, the PUSCH frequency resource allocation for NR-U UE can also support to schedule the PUSCH to be across different LBT bandwidths (or nominal channel bandwidths), wherein such LBT bandwidths either has to be contiguous in frequency domain, or can be either contiguous or non-contiguous in frequency domain (e.g., PUSCH 3 and PUSCH 4 in FIGURE 9).

In one embodiment, since the scheduled PUSCH resources are configured through UL grant, the frequency domain resource relation between a newly scheduled PUSCH of a NR-U UE and the previously scheduled PUSCH of the UE can be one of the following cases.

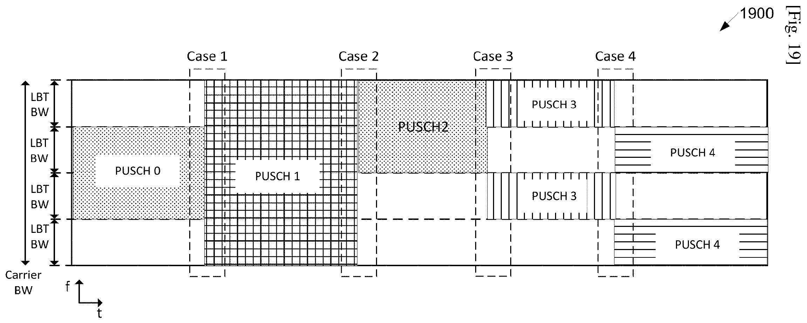

FIGURE 19 illustrates an example PUSCH in carrier BW 1900 according to embodiments of the present disclosure. An embodiment of the PUSCH in carrier BW 1900 shown in FIGURE 19 is for illustration only. One or more of the components illustrated in FIGURE 19 can be implemented in specialized circuitry configured to perform the noted functions or one or more of the components can be implemented by one or more processors executing instructions to perform the noted functions. Other embodiments are used without departing from the scope of the present disclosure.

In one example of case 1, the frequency domain resource for the newly scheduled PUSCH fully contains the frequency domain resource for the previously scheduled PUSCH. As illustrated in FIGURE 19, case 1 happens when scheduled PUSCH changes from PUSCH 0 to PUSCH 1.

In one example of case 2, the frequency domain resource for the newly scheduled PUSCH is fully contained within the frequency domain resource for the previously scheduled PUSCH. In the example of FIGURE 19, case 1 happens when scheduled PUSCH changes from PUSCH 1 to PUSCH 2.

In one example of case 3, the frequency domain resource for the newly scheduled PUSCH is partially overlapped with the frequency domain resource for the previous scheduled PUSCH, and both the new scheduled PUSCH and the previous scheduled PUSCH have non-empty frequency resources after excluding the common frequency resources shared by the two PUSCHs. As illustrated in FIGURE 19, case 1 happens when scheduled PUSCH changes from PUSCH 2 to PUSCH 3.

In one example of case 4, the frequency domain resource for the new scheduled PUSCH and the frequency domain resource for the previous scheduled PUSCH do not share any overlapped frequency-domain resource. As illustrated in FIGURE 19, case 1 happens when scheduled PUSCH changes from PUSCH 3 to PUSCH 4.

In one example, case 1 to case 4 can be applied to when the newly scheduled PUSCH and the previously scheduled PUSCH are in the same active UL BWP.

In one example, case 1 to case 4 can be applied to when the newly scheduled PUSCH and the previously scheduled PUSCH are in different active UL BWPs, i.e., where BWP switching occurs.

An important design consideration when the newly scheduled PUSCH shares different frequency resource from the previously scheduled PUSCH, and that the newly scheduled PUSCH needs to transmitted subject to a CAT-4 LBT at the UE, how to determine the CWS corresponding to the CAT-4 LBT to initiate the UE UL burst to transmit the newly scheduled PUSCH.

In one embodiment, when the newly scheduled PUSCH shares different frequency resource from the previously scheduled PUSCH, and that UE needs to perform a CAT-4 LBT process to initiate a new UL burst to transmit the newly scheduled PUSCH, the CWS for the CAT-4 LBT can be determined based on all or a subset of the HARQ-ACK feedbacks corresponding to the transmission(s) on the most recent reference T/F resources of previous UE UL transmissions.

In one embodiment, when the newly scheduled PUSCH shares different frequency resource from the previously scheduled PUSCH, and that UE needs to perform a CAT-4 LBT process to initiate a new UL burst to transmit the newly scheduled PUSCH, the CWS for the CAT-4 LBT can be determined based on all or a subset of the HARQ-ACK feedbacks corresponding to the transmission(s) the transmission(s) on the most recent reference T/F resources of the active UL BWP wherein the newly scheduled PUSCH is scheduled on.

In one embodiment, when the newly scheduled PUSCH shares different frequency resource from the previously scheduled PUSCH, and that UE needs to perform a CAT-4 LBT process to initiate a new UL burst to transmit the newly scheduled PUSCH, then for a LBT BW that contains the newly scheduled PUSCH, the CWS for the CAT-4 LBT on this LBT BW can be determined based on all or a subset of the HARQ-ACK feedbacks corresponding to the transmission(s) on the most recent reference T/F resources of this LBT BW.

In one embodiment, when the newly scheduled PUSCH shares different frequency resource from the previously scheduled PUSCH, and that UE needs to perform a CAT-4 LBT process to initiate a new UL burst to transmit the newly scheduled PUSCH, the CWS for the newly scheduled can be determined as the default CWS value that corresponds to the corresponding channel access priority class for the newly scheduled PUSCH.

In one embodiment, when the newly scheduled PUSCH shares different frequency resource from the previously scheduled PUSCH, and if the newly scheduled PUSCH overlaps with the frequency resources of the DL COT initiated by a gNB, the newly scheduled PUSCH can be transmitted after successful CAT-2 LBT over the frequency resources that overlaps with the frequency resources of the DL COT initiated by a gNB.

In one embodiment, when the newly scheduled PUSCH shares different frequency resource from the previously scheduled PUSCH, and that UE needs to perform a CAT-4 LBT process to initiate a new UL burst to transmit the newly scheduled PUSCH, the aforementioned embodiment and/or example can be utilized to determine the CWS for the newly scheduled PUSCH, wherein the selected approach can depend on the overlapped frequency resource between the newly scheduled PUSCH and the previously scheduled PUSCH.

Configured grant uplink control information (CG-UCI) includes at least the following information: HARQ process number, new data indicator (NDI), redundancy version (RV), and channel occupancy time (COT) sharing information in case of operation with shared spectrum channel access. CG-UCI can be included in every configured grant (CG)-PUSCH transmission.

For example, the CG-UCI is mapped on the symbols starting after the first DM-RS symbol of a CG-PUSCH transmission. For example, CG-UCI can have the highest priority among UCI types for multiplexing in a CG-PUSCH transmission.

Given that CG-UCI needs to be multiplexed with highest priority in a CG-PUSCH transmission, this disclosure considers enhancements to support UCI multiplexing of CG-UCI, HARQ-ACK, and channel state information (CSI) on a CG-PUSCH transmission, including a relative prioritization for multiplexing of CG-UCI, HARQ-ACK, CSI on CG-PUSCH and the corresponding channels that can be utilized in transmitting CG-UCI, HARQ-ACK and CSI, a power prioritization to various channels that a power limited UE may have to simultaneously transmit, and a selection of a PUSCH for UCI multiplexing, among others.

This disclosure includes several embodiments, principles, approaches and examples that can be used in conjunction or in combination with one another, or can operate as standalone. The embodiments/principles/approaches/examples in this disclosure can be applied to contention-free transmissions on licensed spectrum, to frame based equipment (FBE)-based transmissions with shared spectrum channel access, such as NR-U, to load-based equipment (LBE)-based transmissions with shared spectrum channel access, or to both FBE-based and LBE-based transmissions with shared spectrum channel access.

In this disclosure, FR1 refers to operation in unlicensed/shared/licensed bands in FR1, such as the 5 GHz bands or the 6 GHz unlicensed/shared bands; and FR2 refers to operation in the unlicensed/shared/licensed bands in FR2, such as the 60 GHz bands.

In one embodiment, multiplexing of CG-UCI, HARQ-ACK, Type I sub-band CSI part 1 and part 2 is provided.

This embodiment includes principles, approaches and examples on the multiplexing of CG-UCI, HARQ-ACK, type I sub-band CSI part 1, and type I sub-band CSI part 2. In Rel-15 NR, both type I sub-band CSI part 1 and part 2 are multiplexed on either a PUCCH transmission or a PUSCH transmission on a cell of a cell group, such as a primary cell for a PUCCH transmission. When multiplexing of a CSI report is on a PUSCH transmission, the CSI part 2 can be omitted or dropped according to a priority level and a number of coded modulation symbols per layer for CSI part 2 transmission.

In one embodiment, a relative priority ordering for multiplexing CG-UCI, HARQ-ACK, type I sub-band CSI part 1 and part 2 on a CG-PUSCH transmission, from the highest priority to the lowest priority, is: first CG-UCI, then HARQ-ACK, then type I sub-band CSI part 1, and last type I sub-band CSI part 2. In the following, any UCI type other than CG-UCI is referred to as UCI.

In one example, a UE allocates a number of coded modulation symbols per layer for each of a CG-UCI, HARQ-ACK, type 1 sub-band CSI part 1, and part 2 on CG-PUSCH according to the priority ordering in the aforementioned embodiment.

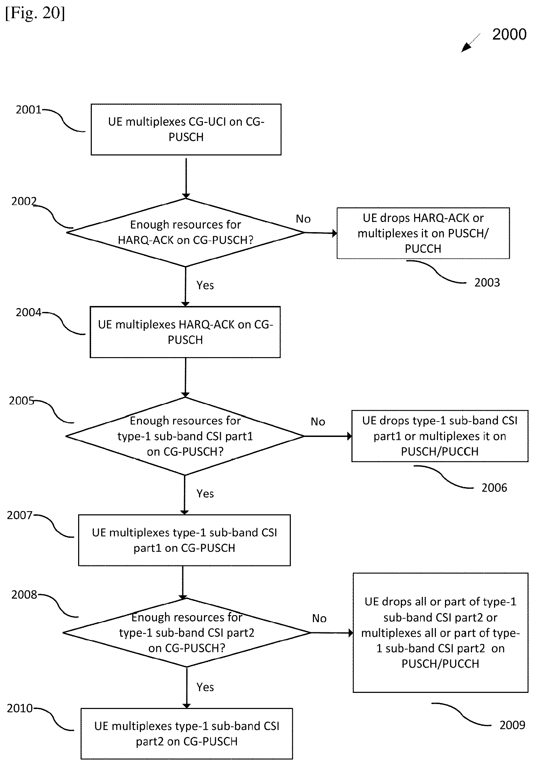

FIGURE 20 illustrates a flow chart of a method 2000 for multiplexing according to the claimed invention, as performed by a UE (e.g., 111-116 as illustrated in FIGURE 1). An embodiment of the method 2000 shown in FIGURE 20 is for illustration only. One or more of the components illustrated in FIGURE 20 can be implemented in specialized circuitry configured to perform the noted functions or one or more of the components can be implemented by one or more processors executing instructions to perform the noted functions. Other embodiments are used without departing from the scope of the present disclosure.

In one example, a UE can drop UCI when there are not enough resources (resource elements in a CG-PUSCH - for example as described in REF 2) after allocation of coded modulation symbols for UCI(s) with higher priority on CG-PUSCH. This example is illustrated in 2003, 2006, and 2009 as illustrated in FIGURE 20.

In one example, a UE can multiplex a UCI type on a PUSCH transmission, other than a CG-PUSCH transmission, when there is not enough resource on the CG-PUSCH after allocation of the coded modulation symbols for GC-UCI or for other UCI type(s) with higher priority on the CG-PUSCH. This example is illustrated in 2003, 2006, and 2009 as illustrated in FIGURE 20.

According to the claimed invention, a UE can multiplex UCI on a PUCCH transmission when there is not enough resource on a CG-PUSCH transmission after allocation of the coded modulation symbols for GC-UCI or for UCI type(s) with higher priority on CG-PUSCH. This example is illustrated in 2003, 2006, and 2009 as illustrated in FIGURE 20.

As illustrated in FIGURE 20, the method begins at step 2001. In step 2001, the UE multiplexes CG-UCI on CG-PUSCH. Subsequently, the UE in step 2002 determines whether enough resources for HARQ-ACK on CG-PUSCH is available. In step 2002, if not enough, the UE performs step 2003. In step 2003, the UE drops HARQ-ACK or multiplexes it on PUSCH/PUCCH. In step 2002, if enough, the UE performs step 2004. In step 2004, the UE multiplexes HARQ-ACK on CG-PUSCH. Subsequently, the UE in step 2005 determines whether enough resources for type-1 sub-band CSI part1 on CG-PUSCH are available. In step 2005, if not enough, the UE performs step 2006. In step 2006, the UE drops type-1 sub-band CSI part1 or multiplexes it on PUSCH/PUCCH. In step 2005, if enough, the UE in step 2007 multiplexes type-1 sub-band CSI part1 on CG-PUSCH. In step 2008, the UE determines whether, enough resources for type-1 sub-band CSI part2 on CG-PUSCH are available. In step 2008, if not the UE performs step 2009. In step 2009, the UE drops all or part of type-1 sub-band CSI part2 or multiplexes all or part of type-1 sub-band CSI part2 on PUSCH/PUCCH. In step 2008, if enough, the UE in step 2010 multiplexes type-1 sub-band CSI part2 on CG-PUSCH.

In one example, all or a subset of the scenarios in TABLE 1 can be supported for the channels that a UE can use to multiplex CG-UCI, HARQ-ACK, and Type I sub-band CSI part 1 and part 2. For a given scenario (i.e., for a given row) in TABLE 1, each entry in TABLE 1 represents the channel where the UE can multiplex a corresponding UCI.

In one example of scenario 1, a UE can multiplex all of CG-UCI, HARQ-ACK, type I sub-band CSI part 1, and type I sub-band CSI part 2 on a CG-PUSCH transmission.

In one example of scenario 2, a UE can multiplex CG-UCI, HARQ-ACK, type I sub-band CSI part 1 on a CG-PUSCH transmission while the UE can drop all or part of type I sub-band CSI part 2 from the CG-PUSCH transmission according to the aforementioned embodiment and/or example.

In scenario 3 according to the claimed invention, a UE can multiplex CG-UCI, HARQ-ACK, type I sub-band CSI part 1 on a CG-PUSCH transmission and can multiplex all or part of type I sub-band CSI part 2 on PUCCH transmission Alternatively, in a different, non claimed embodiment, the UE can multiplex all or part of type I sub-band CSI part 2 on another PUSCH.

In one example of scenario 4, a UE can multiplex CG-UCI and HARQ-ACK on a CG-PUSCH transmission and can drop all of type I sub-band CSI part 1 and type I sub-band CSI part 2 from the CG-PUSCH transmission according to the aforementioned example and/or embodiment.

In one example of scenario 5, a UE can multiplex CG-UCI and HARQ-ACK on a CG-PUSCH transmission and multiplex type I sub-band CSI part 1 and all or part of type I sub-band CSI part 2 on another PUSCH transmission (different from the CG-PUSCH transmission).

In one example of scenario 6, a UE can multiplex CG-UCI and HARQ-ACK on a CG-PUSCH transmission and multiplex type I sub-band CSI part 1 and all or part of type I sub-band CSI part 2 on a PUCCH transmission.

In one example of scenario 7, a UE can multiplex CG-UCI on a CG-PUSCH transmission and drop HARQ-ACK, type I sub-band CSI part 1, and type I sub-band CSI part 2 from the CG-PUSCH transmission according to the aforementioned embodiment and/or example.

In one example of scenario 8, a UE can multiplex CG-UCI on the CG-PUSCH transmission and multiplex HARQ-ACK on another PUSCH transmission (different from the CG-PUSCH transmission) or on a PUCCH transmission, and multiplex type I sub-band CSI part 1 and all or part of type I sub-band CSI part 2 on another PUSCH transmission (different from the CG-PUSCH transmission).

In one example of scenario 9, a UE can multiplex CG-UCI on a CG-PUSCH transmission, and multiplex HARQ-ACK on another PUSCH transmission (different from the CG-PUSCH transmission) or a PUCCH transmission, and multiplex type I sub-band CSI part 1 and all or part of type I sub-band CSI part 2 on a PUCCH transmission.

[Table 1]

| Signals | CG-UCI | HARQ-ACK | Type I sub-band CSI part 1 | Type I sub-band CSI part 2 |
|---|---|---|---|---|
| Scenario 1 | CG-PUSCH | CG-PUSCH | CG-PUSCH | CG-PUSCH |
| Scenario 2 | CG-PUSCH | CG-PUSCH | CG-PUSCH | dropped |
| Scenario 3 | CG-PUSCH | CG-PUSCH | CG-PUSCH | PUSCH (different from CG-PUSCH) or PUCCH |
| Scenario 4 | CG-PUSCH | CG-PUSCH | dropped | dropped |
| Scenario 5 | CG-PUSCH | CG-PUSCH | PUSCH (different from CG-PUSCH) | PUSCH (different from CG-PUSCH) |
| Scenario 6 | CG-PUSCH | CG-PUSCH | PUCCH | PUCCH |
| Scenario 7 | CG-PUSCH | dropped | dropped | dropped |
| Scenario 8 | CG-PUSCH | PUSCH (different from CG-PUSCH) or PUCCH | PUSCH (different from CG-PUSCH) | PUSCH (different from CG-PUSCH) or dropped |
| Scenario 9 | CG-PUSCH | PUCCH (different from CG-PUSCH) or PUSCH | PUCCH | PUCCH or dropped |

In one embodiment, multiplexing of CG-UCI, HARQ-ACK, Type II sub-band CSI part 1 and part 2 is provided.

In one embodiment, approaches and examples on multiplexing CG-UCI, HARQ-ACK, type II sub-band CSI part 1, and type II sub-band CSI part 2 are provide.

In NR standard specification, a UE can multiplex type II sub-band CSI part 1 and part 2 can be on either a PUCCH or a PUSCH transmission, or can multiplex type II sub-band CSI part 1 can be on a PUCCH transmission and multiplex type II sub-band CSI part 2 on a PUSCH transmission. When CSI reporting is on PUSCH, a UE can omit/drop the part 2 CSI according to a priority level and a number of coded modulation symbols per layer for CSI part 2 multiplexing.

In one embodiment, a relative priority ordering for a UE to multiplex CG-UCI, HARQ-ACK, type II sub-band CSI part 1 and part 2 on a CG-PUSCH transmission, from the highest priority to lowest priority, is: first CG-UCI, then HARQ-ACK, then type II sub-band CSI part 1, and last type II sub-band CSI part 2.

In one example, a UE allocates a number of coded modulation symbols per layer for CG-UCI, HARQ-ACK, type II sub-band CSI part 1, and part 2 on CG-PUSCH according to the priority ordering in the aforementioned embodiment and/or example.

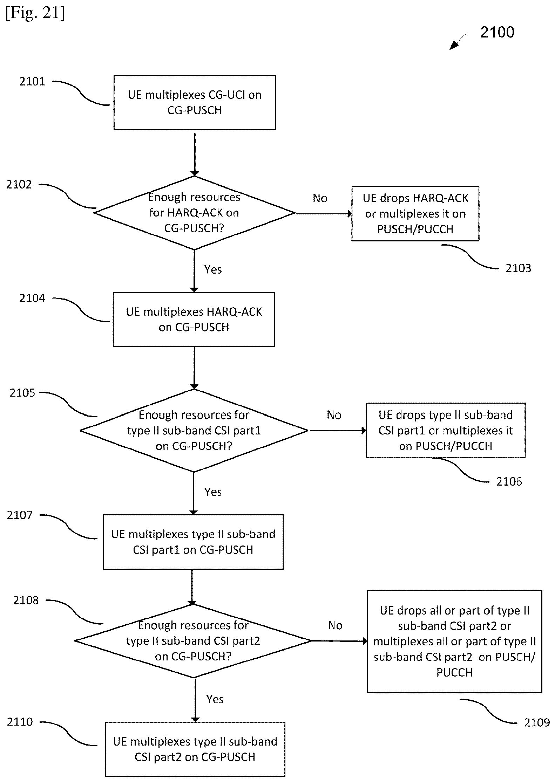

FIGURE 21 illustrates another flow chart of a method 2100 for multiplexing according to the claimed invention. An embodiment of the method 2100 shown in FIGURE 21 is for illustration only. One or more of the components illustrated in FIGURE 21 can be implemented in specialized circuitry configured to perform the noted functions or one or more of the components can be implemented by one or more processors executing instructions to perform the noted functions. Other embodiments are used without departing from the scope of the present disclosure.

In one example, a UE drops/omits UCI when there is not enough resource after allocation of the coded modulation symbols for UCI(s) with higher priority on a CG-PUSCH transmission. This example can be provided in step 2103, 2106, and 2109 as illustrated in FIGURE 21.

In one example, a UE can multiplex UCI on another PUSCH transmission different from a CG-PUSCH transmission, when there is not enough resource on the CG-PUSCH after allocation of coded modulation symbols for UCI(s) with higher priority on the CG-PUSCH. This example can be provided in step 2103, 2106, and 2109 as illustrated in FIGURE 21.

According to the claimed invention, a UE can multiplex UCI on a PUCCH transmission when there is not enough resource on a CG-PUSCH transmission after allocation of the coded modulation symbols for UCI(s) with higher priority on the CG-PUSCH transmission. This example can be provided in step 2103, 2106, and 2109 as illustrated in FIGURE 21.

As illustrated in FIGURE 21, the method 2100 begins at step 2101. In step 2101, the UE multiplexes CG-UCI on CG-PUSCH. Subsequently, the UE in step 2102 determines whether enough resources for HARQ-ACK on CG-PUSCH is available. In step 2102, if not enough, the UE performs step 2103. In step 2103, the UE drops HARQ-ACK or multiplexes it on PUSCH/PUCCH. In step 2102, if enough, the UE performs step 2104. In step 2104, the UE multiplexes HARQ-ACK on CG-PUSCH. Subsequently, the UE in step 2105 determines whether enough resources for type-2 sub-band CSI part1 on CG-PUSCH are available. In step 2105, if not enough, the UE performs step 2106. In step 2106, the UE drops type-2 sub-band CSI part1 or multiplexes it on PUSCH/PUCCH. In step 2105, if enough, the UE in step 2107 multiplexes type-2 sub-band CSI part1 on CG-PUSCH. In step 2008, the UE determines whether enough resources for type-2 sub-band CSI part2 on CG-PUSCH are available. In step 2108, if not, the UE performs step 2109. In step 2109, the UE drops all or part of type-2 sub-band CSI part2 or multiplexed all or part of type-2 sub-band CSI part2 on PUSCH/PUCCH. In step 2108, if enough, the UE performs step 2110. In step 2110, the UE multiplexes type-2 sub-band CSI part2 on CG-PUSCH.

In one example, all or a subset of the scenarios in TABLE 2 can be supported for the channels for a UE to multiplex CG-UCI, HARQ-ACK, and Type II sub-band CSI part 1 and part 2. For a given scenario (i.e., for a given row) in TABLE 2, each entry in TABLE 2 represents the channel where the UE multiplexes a corresponding UCI. Each scenario is as follows.

In one example of scenario 1, a UE can multiplex all of CG-UCI, HARQ-ACK, type II sub-band CSI part 1, and type II sub-band CSI part 2 on the CG-PUSCH transmission.

In one example of scenario 2, a UE can multiplex CG-UCI, HARQ-ACK, and type II sub-band CSI part 1 on the CG-PUSCH transmission. The UE can drop all or part of type II sub-band CSI part 2 from the CG-PUSCH transmission according to the aforementioned embodiment and/or example.

In scenario 3 according to the claimed invention, a UE can multiplex CG-UCI, HARQ-ACK, type II sub-band CSI part 1 on the CG-PUSCH transmission. The UE can multiplex all or part of type II sub-band CSI part 2 on PUCCH transmission Alternatively, in a different, non claimed embodiment, the UE can multiplex all or part of type I sub-band CSI part 2 on another PUSCH (different from the CG-PUSCH transmission).

In one example of scenario 4, a UE can multiplex CG-UCI and HARQ-ACK on the CG-PUSCH transmission. The UE can drop all of type II sub-band CSI part 1 and type II sub-band CSI part 2 from the CG-PUSCH transmission according to the aforementioned embodiment and/or example.

In one example of scenario 5, a UE can multiplex CG-UCI, HARQ-ACK on the CG-PUSCH transmission. The UE can multiplex type II sub-band CSI part 1 and all or part of type II sub-band CSI part 2 on another PUSCH transmission (different from the CG-PUSCH transmission).

In one example of scenario 6, a UE can multiplex CG-UCI, HARQ-ACK on the CG-PUSCH transmission. The UE can multiplex type II sub-band CSI part 1 and all or part of type II sub-band CSI part 2 on a PUCCH transmission.

In one example of scenario 7, a UE can multiplex CG-UCI and HARQ-ACK on the CG-PUSCH transmission. The UE can multiplex type II sub-band CSI part 1 on a PUCCH transmission and can multiplex all or part of type II sub-band CSI part 2 on another PUSCH transmission (different from the CG-PUSCH transmission).

In one example of scenario 8, a UE can multiplex CG-UCI on the CG-PUSCH transmission. The UE can drop HARQ-ACK, type II sub-band CSI part 1 and type II sub-band CSI part 2 from the CG-PUSCH transmission according to the aforementioned embodiment and/or example.

In one example of scenario 9, a UE can multiplex CG-UCI on the CG-PUSCH transmission, while HARQ-ACK can be multiplexed on another PUSCH transmission (different from the CG-PUSCH transmission) or on a PUCCH transmission, and type II sub-band CSI part 1 and all or part of type II sub-band CSI part 2 can be multiplexed on another PUSCH transmission (different from the CG-PUSCH transmission).

In one example of scenario 10, a UE can multiplex CG-UCI on the CG-PUSCH transmission. The UE can multiplex HARQ-ACK on another PUSCH transmission (different from the CG-PUSCH transmission) or on a PUCCH transmission and can multiplex type II sub-band CSI part 1 and all or part of type II sub-band CSI part 2 on PUCCH transmission.

In one example of scenario 11, a UE can multiplex CG-UCI on the CG-PUSCH transmission. The UE can multiplex HARQ-ACK on another PUSCH transmission (different from the CG-PUSCH transmission) or on a PUCCH transmission, and multiplex type II sub-band CSI part 1 on the PUCCH transmission and all or part of type II sub-band CSI part 2 on another PUSCH transmission (different from the CG-PUSCH transmission).

[Table 2]

| Scenario and signals | | | | |
|---|---|---|---|---|
| Signals | CG-UCI | HARQ-ACK | Type II sub-band CSI part 1 | Type II sub-band CSI part 2 |
| Scenario 1 | CG-PUSCH | CG-PUSCH | CG-PUSCH | CG-PUSCH |

(continued)

| Scenario and signals | | | | |
|---|---|---|---|---|
| Signals | CG-UCI | HARQ-ACK | Type II sub-band CSI part 1 | Type II sub-band CSI part 2 |
| Scenario 2 | CG-PUSCH | CG-PUSCH | CG-PUSCH | dropped |
| Scenario 3 | CG-PUSCH | CG-PUSCH | CG-PUSCH | PUSCH (different from CG-PUSCH) or PUCCH |
| Scenario 4 | CG-PUSCH | CG-PUSCH | dropped | dropped |
| Scenario 5 | CG-PUSCH | CG-PUSCH | PUSCH (different from CG-PUSCH) | PUSCH (different from CG-PUSCH) |
| Scenario 6 | CG-PUSCH | CG-PUSCH | PUCCH | PUCCH |
| Scenario 7 | CG-PUSCH | CG-PUSCH | PUCCH | PUSCH (different from CG-PUSCH) |
| Scenario 8 | CG-PUSCH | dropped | dropped | dropped |
| Scenario 9 | CG-PUSCH | PUSCH (different from CG-PUSCH) or PUCCH | PUSCH (different from CG-PUSCH) | PUSCH (different from CG-PUSCH) or dropped |
| Scenario 10 | CG-PUSCH | PUCCH or PUSCH (different from CG-PUSCH) | PUCCH | PUCCH or dropped |
| Scenario 11 | CG-PUSCH | PUCCH or PUSCH (different from CG-PUSCH) | PUCCH | PUSCH (different from CG-PUSCH) or dropped |

In one embodiment, multiplexing of CG-UCI, HARQ-ACK, and Wideband CSI is provided. This embodiment includes principles, approaches and examples for a UE to multiplex of CG-UCI, HARQ-ACK, and wideband CSI in a PUSCH or in a PUCCH transmission. In Rel-15 NR, wideband CSI is multiplexed in a PUCCH transmission.

In one embodiment, a relative priority ordering for multiplexing CG-UCI, HARQ-ACK, and wideband CSI, from the highest priority to lowest priority, is: first CG-UCI, then HARQ-ACK, last wideband CSI.

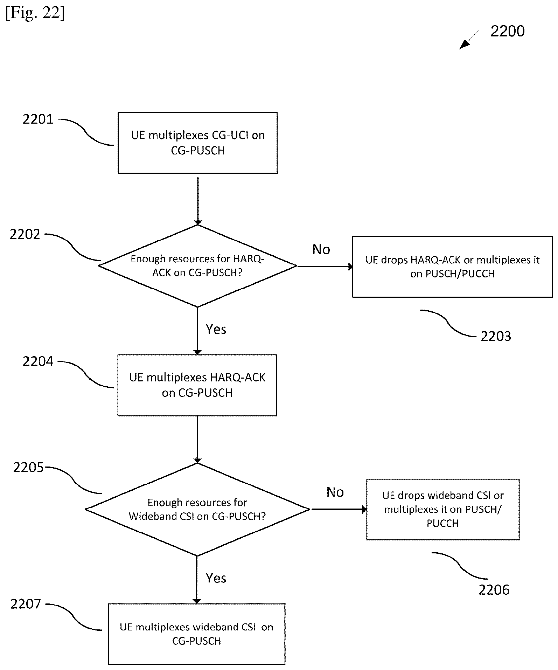

In one example, a UE allocates a number of coded modulation symbols per layer for CG-UCI, HARQ-ACK, and wideband CSI on a CG-PUSCH transmission according to the priority ordering as illustrated in FIGURE 22.

FIGURE 22 illustrates yet another flow chart of a method 2200 for multiplexing according to embodiments of the present disclosure. An embodiment of the method 2200 shown in FIGURE 22 is for illustration only. One or more of the components illustrated in FIGURE 22 can be implemented in specialized circuitry configured to perform the noted functions or one or more of the components can be implemented by one or more processors executing instructions to perform the noted functions. Other embodiments are used without departing from the scope of the present disclosure.

In one example, a UE drops/omits UCI when there is not enough resource after allocation of coded modulation symbols for UCI(s) with higher priority on a CG-PUSCH transmission as illustrated in step 2203 and 2206 as illustrated in FIGURE 22.

In one example, a UE multiplexes UCI on a PUSCH transmission different from the CG-PUSCH transmission, when there is not enough resource on the CG-PUSCH transmission after allocation of the coded modulation symbols for UCI(s) with higher priority on the CG-PUSCH. This example is illustrated in FIGURE 22.

As illustrated in FIGURE 22, the method 2200 begins at step 2201. In step 2201, the UE multiplexes CG-UCI on CG-PUSCH. Subsequently, the UE in step 2202 determines whether enough resources for HARQ-ACK on CG-PUSCH is available. In step 2202, if not enough, the UE performs step 2203. In step 2203, the UE drops HARQ-ACK or multiplexes it on PUSCH/PUCCH. In step 2202, if enough, the UE performs step 2204. In step 2104, the UE multiplexes HARQ-ACK on CG-PUSCH. Subsequently, the UE in step 2205 determines whether enough resources for wideband CSI on CG-PSCH are available. In step 2205, if not enough, the UE performs step 2206. In step 2206, the UE drops wideband CSI or multiplexes it on PUSCH/PUCCH. In step 2205, if enough, the UE in step 2207 multiplexes wideband CSI on CG-PUSCH.

In one example, a UE multiplexes UCI on a PUCCH transmission when there is not enough resource on the CG-PUSCH transmission after allocation of the coded modulation symbols for UCI(s) with higher priority on the CG-PUSCH. This example is illustrated in FIRURE 22.

In one example, all or a subset of the scenarios in TABLE 3 can be supported for the channels that a UE can multiplex CG-UCI, HARQ-ACK, and wideband CSI. For a given scenario (i.e. a given row) in TABLE 3, each entry in TBALE 3 represents the channel on where a UE can multiplex corresponding UCI. Each scenario is as follows.

In one example of scenario 1, a UE multiplexes all of CG-UCI, HARQ-ACK, and wideband CSI on a CG-PUSCH transmission.

In one example of scenario 2, a UE multiplexes CG-UCI and HARQ-ACK on the CG-PUSCH transmission and multiplexes wideband CSI on a PUCCH transmission.

In one example of scenario 3, a UE multiplexes CG-UCI and HARQ-ACK on the CG-PUSCH transmission and multiplexes wideband CSI on another PUSCH transmission (different from the CG-PUSCH transmission).

In one example of scenario 4, a UE multiplexes CG-UCI and HARQ-ACK on the CG-PUSCH transmission and drops wideband CSI.

In one example of scenario 5, a UE multiplexes CG-UCI on the CG-PUSCH transmission and multiplexes HARQ-ACK and wideband CSI on a PUCCH transmission.

In one example of scenario 6, a UE multiplexes CG-UCI on the CG-PUSCH transmission, multiplexes HARQ-ACK on another PUSCH transmission (different from the CG-PUSCH transmission) and multiplexes wideband CSI on a PUCCH transmission.

In example of scenario 7, a UE multiplexes CG-UCI on the CG-PUSCH transmission and multiplexes HARQ-ACK and wideband CSI on another PUSCH transmission (different from the CG-PUSCH transmission).

[Table 3]

| Scenario and signals | | | |
|---|---|---|---|
| Signals | CG-UCI | HARQ-ACK | Wideband CSI |
| Scenario 1 | CG-PUSCH | CG-PUSCH | CG-PUSCH |
| Scenario 2 | CG-PUSCH | CG-PUSCH | PUCCH |
| Scenario 3 | CG-PUSCH | CG-PUSCH | PUSCH (different from CG-PUSCH) |
| Scenario 4 | CG-PUSCH | CG-PUSCH | dropped |
| 5 Scenario | CG-PUSCH | PUCCH | PUCCH or dropped |
| Scenario 6 | CG-PUSCH | PUSCH (different from CG-PUSCH) | PUCCH or dropped |
| Scenario 7 | CG-PUSCH | PUSCH (different from CG-PUSCH) | PUSCH (different from CG-PUSCH) or dropped |

In one embodiment, a UE procedure for reporting CG-UCI is provided.

In NR standard specification, if a UE transmits multiple PUSCHs in a slot on respective serving cells that include first PUSCHs that are scheduled by DCI format(s) and second PUSCHs configured by respective higher layer parameters ConfiguredGrantConfig or semiPersistentOnPUSCH, and the UE would multiplex UCI in one of the multiple PUSCHs, and the multiple PUSCHs fulfil the conditions in NR specification for UCI multiplexing, the UE multiplexes the UCI in a PUSCH from the first PUSCHs. However, this NR UCI multiplexing procedure does not directly apply to CG-UCI in a CG-PUSCH transmission since CG-UCI has the highest priority in UCI multiplexing and is included in every CG-PUSCH transmission.

In one embodiment, if a UE transmits multiple PUSCHs in a slot on respective serving cells that include first PUSCHs that are scheduled by DCI format(s) and second PUSCHs configured by respective ConfiguredGrantConfig, and the UE would multiplex UCI, including the CG-UCI, in one of the multiple PUSCHs, and the multiple PUSCHs fulfil conditions for UCI multiplexing, such as for example the conditions in NR standard specification, the UE multiplexes the UCI in a CG-PUSCH from the second PUSCHs configured by ConfiguredGrantConfig; otherwise, the UE multiplexes UCI in a PUSCH transmission scheduled by a DCI format instead of a PUSCH transmission configured by higher layer signaling.

In one embodiment, if a UE transmits multiple PUSCHs in a slot on respective serving cells that include first PUSCHs that are scheduled by DCI format(s) and second PUSCHs configured by respective ConfiguredGrantConfig, and the UE would multiplex UCI, including the CG-UCI, in one of the multiple PUSCHs, and the multiple PUSCHs fulfil conditions for UCI multiplexing, the UE multiplexes the CG-UCI in a CG-PUSCH from the second PUSCHs configured by ConfiguredGrantConfig, and the UE multiplexes the UCIs excluding the CG-UCI in a PUSCH from the first PUSCHs.

In one embodiment, if a UE transmits multiple PUSCHs in a slot on respective serving cells that include first PUSCHs configured by respective ConfiguredGrantConfig, and the UE would multiplex UCI, including the CG-UCI, in one of the multiple PUSCHs, and the multiple PUSCHs fulfil conditions for UCI multiplexing, the UE multiplexes the UCI in the first PUSCHs configured by ConfiguredGrantConfig.

In one embodiment, prioritizations for transmission power is provided.

In NR standard specification, a UE allocates power to PUSCH/PUCCH/PRACH/SRS transmissions according to the following priority order (in descending order) so that a total UE transmit power is smaller than or equal to a maximum transmit power in every symbol of the transmission occasion: PRACH transmission on the PCell; PUCCH transmission with HARQ-ACK information and/or SR or PUSCH transmission with HARQ-ACK information; PUCCH transmission with CSI or PUSCH transmission with CSI; PUSCH transmission without HARQ-ACK information or CSI; SRS transmission, with aperiodic SRS having higher priority than semi-persistent and/or periodic SRS; or PRACH transmission on a serving cell other than the PCell.

Transmit power prioritization rules also need to be defines when a UE transmits a CG-PUSCH with CG-UCI.

In one embodiment, the UE allocates power to PUSCH/PUCCH/PRACH/SRS/CG-PUSCH according to the following priority order (in descending order): PRACH transmission on the PCell; CG-PUSCH transmission with CG-UCI information; PUCCH transmission with HARQ-ACK information and/or SR or PUSCH transmission with HARQ-ACK information; PUCCH transmission with CSI or PUSCH transmission with CSI; PUSCH transmission without HARQ-ACK information or CSI; SRS transmission, with aperiodic SRS having higher priority than semi-persistent and/or periodic SRS; or PRACH transmission on a serving cell other than the PCell.

In one embodiment, the UE allocates power to PUSCH/PUCCH/PRACH/SRS/CG-PUSCH according to the following priority order (in descending order): PRACH transmission on the PCell; PUCCH transmission with HARQ-ACK information and/or SR or PUSCH transmission with HARQ-ACK information; PUCCH transmission with CSI or PUSCH transmission with CSI; CG-PUSCH transmission with CG-UCI information; PUSCH transmission without HARQ-ACK information or CSI; SRS transmission, with aperiodic SRS having higher priority than semi-persistent and/or periodic SRS; or PRACH transmission on a serving cell other than the PCell.

In one embodiment, the UE allocates power to PUSCH/PUCCH/PRACH/SRS/CG-PUSCH according to the following priority order (in descending order): PRACH transmission on the PCell; PUCCH transmission with HARQ-ACK information and/or SR or PUSCH transmission with HARQ-ACK information; CG-PUSCH transmission with CG-UCI information; PUCCH transmission with CSI or PUSCH transmission with CSI; PUSCH transmission without HARQ-ACK information or CSI; SRS transmission, with aperiodic SRS having higher priority than semi-persistent and/or periodic SRS; or PRACH transmission on a serving cell other than the PCell.

In one example, a UE may also prioritize power allocation to a transmission depending on a channel access mechanism for the transmission. For example, the UE can prioritize power allocation to a PUSCH or PUCCH transmission on a serving cell operating on licensed spectrum over a power allocation to a PUSCH or PUCCH transmission on a serving cell operating on shared spectrum. For example, a UE can prioritize power to a PUSCH transmission with UCI, such as HARQ-ACK information, on a serving cell operating on licensed spectrum (without a channel access mechanism for the transmission) over a CG-PUSCH transmission with CG-UCI.

In one embodiment, UCI reporting in CG-PUSCH is provided. An RRC configuration can be provide to the UE to configure the multiplexing of CG-UCI and HARQ-ACK over CG-PUSCH; and in case of PUCCH overlapping with CG-PUSCH(s) within a PUCCH group, the CG-UCI and HARQ-ACK are jointly encoded wherein the CG-UCI is treated as the same type as the HARQ-ACK.

The HARQ-ACK information offsets $\beta_{offset}^{HARQ-ACK}$ are configured to values according to 3GPP specification. The betaOffsetACK-Index1, betaOffsetACK-Index2, and betaOffsetACK-Index3 respectively provide indexes $I_{offset,0}^{HARQ-ACK}$, $I_{offset,1}^{HARQ-ACK}$, $I_{offset,2}^{HARQ-ACK}$ for the UE to use if the UE multiplexes up to 2 HARQ-ACK information bits, more than 2 and up to 11 HARQ-ACK information bits, and more than 11 bits in the PUSCH, respectively. In the rest of this embodiment, the beta_offset index for HARQ-ACK is denoted by $I_{offset}^{HARQ-ACK}$. In addition, a UE is provided by betaOffsetCG-UCI-r16 a $I_{offset}^{CG-UCI}$ value, from a set of values, with the mapping defined in 3GPP specification. A UE jointly encodes the HARQ-ACK information and the CG-UCI and determines a corresponding $I_{offset}^{HARQ-ACK/CG-UCI}$ value. This embodiment includes approaches and examples in determining the $I_{offset}^{HARQ-ACK/CG-UCI}$ value values for the jointly encoded HARQ-ACK and CG-UCI.

In one embodiment, the UE jointly encodes the HARQ-ACK and CG-UCI and determines a corresponding $I_{offset}^{HARQ-ACK/CG-UCI}$ value, wherein $I_{offset}^{HARQ-ACK/CG-UCI}$ is determined from the offset indexes $I_{offset}^{HARQ-ACK}$ and $I_{offset}^{CG-UCI}$ that are configured according to 3GPP specification.

In one example, $I_{offset}^{HARQ-ACK/CG-UCI} = \min(I_{offset}^{HARQ-ACK}, I_{offset}^{CG-UCI})$.

In one example, $I_{offset}^{HARQ-ACK/CG-UCI} = \max(I_{offset}^{HARQ-ACK}, I_{offset}^{CG-UCI})$.

In one example, $I_{offset}^{HARQ-ACK/CG-UCI} = \text{floor}((I_{offset}^{HARQ-ACK} + I_{offset}^{CG-UCI})/2)$.

In one example, $I_{offset}^{HARQ-ACK/CG-UCI} = \text{ceil}((I_{offset}^{HARQ-ACK} + I_{offset}^{CG-UCI})/2)$.

In one example, $I_{offset}^{HARQ-ACK/CG-UCI} = I_{offset}^{HARQ-ACK}$.

In one example, $I_{offset}^{HARQ-ACK/CG-UCI} = I_{offset}^{CG-UCI}$.

In one embodiment, the UE jointly encodes the HARQ-ACK and CG-UCI and determines a corresponding $\beta_{offset}^{HARQ-ACK/CG-UCI}$ value, wherein $\beta_{offset}^{HARQ-ACK/CG-UCI}$ is determined from the beta_offset values $\beta_{offset}^{HARQ-ACK}$ and $\beta_{offset}^{CG-UCI}$ that are configured according to 3GPP standard specification.

In one example, $\beta_{offset}^{HARQ-ACK/CG-UCI} = \min(\beta_{offset}^{HARQ-ACK}, \beta_{offset}^{CG-UCI})$.

In one example, $\beta_{offset}^{HARQ-ACK/CG-UCI} = \max(\beta_{offset}^{HARQ-ACK}, \beta_{offset}^{CG-UCI})$.

In one example, $\beta_{offset}^{HARQ-ACK/CG-UCI} = \text{floor}((\beta_{offset}^{HARQ-ACK} + \beta_{offset}^{CG-UCI})/2)$.

In one example, $\beta_{offset}^{HARQ-ACK/CG-UCI} = \text{ceil}((\beta_{offset}^{HARQ-ACK} + \beta_{offset}^{CG-UCI})/2)$.

In one example, $\beta_{offset}^{HARQ-ACK/CG-UCI} = \beta_{offset}^{HARQ-ACK}$.

In one example, $\beta_{offset}^{HARQ-ACK/CG-UCI} = \beta_{offset}^{CG-UCI}$.

In one embodiment, the UE jointly encodes the HARQ-ACK and CG-UCI, and separate offset indexes $I_{offset}^{HARQ-ACK}$ and $I_{offset}^{CG-UCI}$, which are configured according to 3GPP standard specification, are applied to HARQ-ACK and CG-UCI respectively.

In one embodiment, the UE jointly encodes the HARQ-ACK and CG-UCI, and separate beta_offset values $\beta_{offset}^{HARQ-ACK}$ and $\beta_{offset}^{CG-UCI}$, which are configured according to 3GPP standard specification, are applied to HARQ-ACK and CG-UCI respectively.

In NR unlicensed system (NR-U), candidate monitoring slots for Type0 PDCCH search space set are the PDCCH monitoring slots associated with SS/PBCH blocks that are QCL with the SS/PBCH block from which the UE determines that a CORESET for Type0-PDCCH CSS set is present. In NR, for multiplexing pattern 1, the number of monitoring slots associated to a SS/PBCH block is 2, and the slots are determined based on parameter O and M, which were originally designed for licensed band.

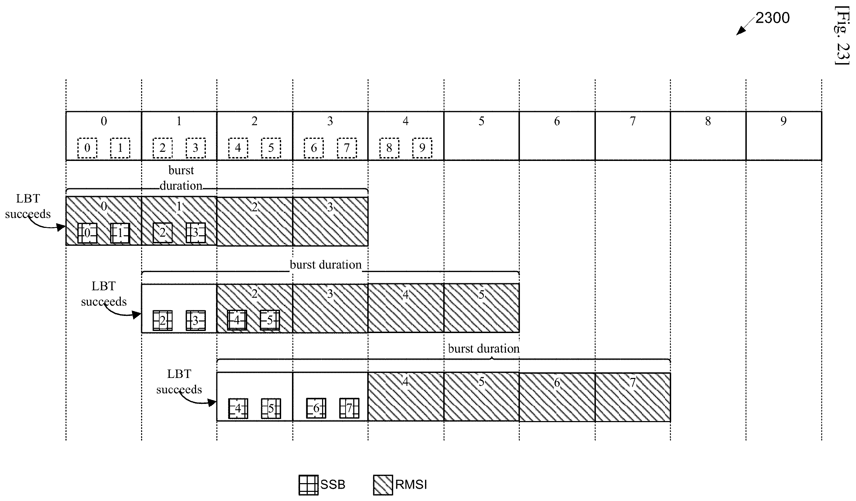

Depending on the value of M in the configuration for Type0-PDCCH CSS set, the total duration of transmission burst variates with successful LBT location, which challenges the LBT type and/or priority class applicable to this transmission. An illustration of this issue is shown in FIGURE 23.

As illustrated in FIGURE 23, Q is assumed as 4, and transmission of SSB and RMSI are in the same half frame. If M = 1, the total duration of SSB and associated RMSI variates subject to the location where LBT succeeds, and this may not be properly defined for unlicensed operation in term of deciding an applicable LBT type and/or priority class.

FIGURE 23 illustrates an example LBT location 2300 according to embodiments of the present disclosure. An embodiment of the LBT location 2300 shown in FIGURE 23 is for illustration only. One or more of the components illustrated in FIGURE 23 can be implemented in specialized circuitry configured to perform the noted functions or one or more of the components can be implemented by one or more processors executing instructions to perform the noted functions. Other embodiments are used without departing from the scope of the present disclosure.

As a result, depending on the candidate starting position, the corresponding burst duration can dynamically change as the candidate starting position varies within the transmission window. When the burst duration exceeds beyond the maximum channel occupancy time (MCOT) of the current gNB LBT type, or the current gNB LBT type can no longer be applied (e.g., CAT-2 LBT), the LBT type needs to be correspondingly adjusted by the gNB.

This disclosure is focused on the enhancements of the LBT procedure such that the LBT type to transmit an NR-U channel/signal can be dynamically adjusted based on the candidate starting position and corresponding burst duration of the channel/signal.

This disclosure includes several embodiments, principles, approaches and examples that can be used in conjunction or in combination with one another, or can operate as standalone. The embodiments/principles/approaches/examples in this disclosure can be applied to contention-free transmissions on licensed spectrum, to frame based equipment (FBE)-based transmissions with shared spectrum channel access, such as NR-U, to load-based equipment (LBE)-based transmissions with shared spectrum channel access, or to both FBE-based and LBE-based transmissions with shared spectrum channel access.

In the present disclosure, FR1 refers to operation in unlicensed/shared/licensed bands in FR1, such as the 5 GHz bands or the 6 GHz unlicensed/shared bands; and FR2 refers to operation in the unlicensed/shared/licensed bands in FR2, such as the 60 GHz bands.

In one embodiment, transmission starting position based adaptive LBT procedure is provided. In such embodiment, principles, approaches and examples on the an adaptive LBT procedure are provided where the LBT type for an NR-U transmission burst including channel/signal is adjusted based on the potential transmission starting position and the determined burst duration associated with the starting position.

In one embodiment, the priority ordering of the LBT type that can be utilized by gNB to transmit a DL transmission burst including channel/signal, ordered from the highest to the lowest, is: CAT-2 LBT, CAT-4 LBT with channel access priority class (CAPC) value 1, CAT-4 LBT with CAPC value 2, CAT-4 LBT with CAPC value 3, and CAT-4 LBT with CAPC value 4; and if the gNB cannot use the LBT type with current priority order, the gNB may dynamically change the LBT engine to the LBT type corresponding to that with next lower priority.

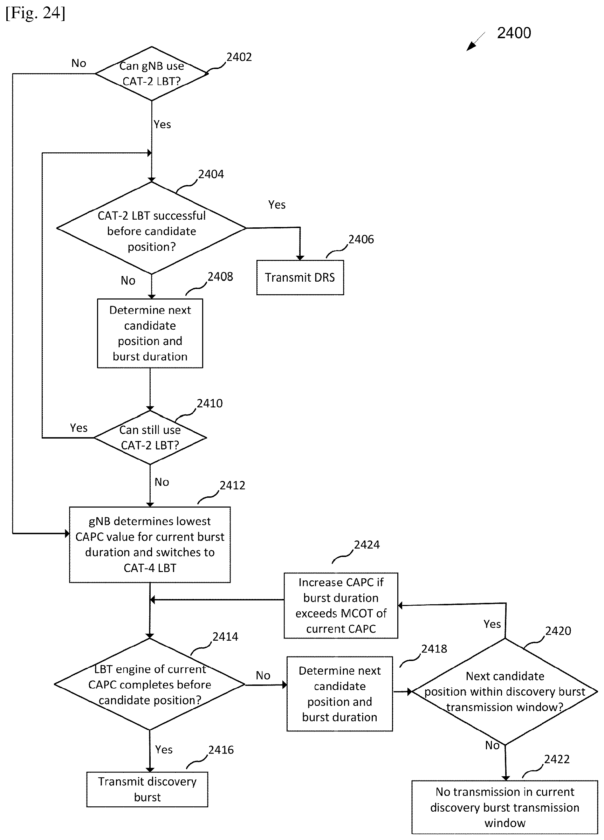

FIGURE 24 illustrates a flow chart of a method 2400 for adaptive LBT procedure according to embodiments of the present disclosure, as may be performed by a gNB (e.g., 101-103 as illustrated in FIGURE 1). An embodiment of the method 2400 shown in FIGURE 24 is for illustration only. One or more of the components illustrated in FIGURE 24 can be implemented in specialized circuitry configured to perform the noted functions or one or more of the components can be implemented by one or more processors executing instructions to perform the noted functions. Other embodiments are used without departing from the scope of the present disclosure.

As illustrated in FIGURE 24, the NR-U channel/signal to transmit is the discovery burst.

As illustrated in FIGURE 24, the method 2400 begins at step 2402. In step 2402, the gNB determines whether the gNB can use CAT-2 LBT. In step 2402, if not, the gNB performs step 2412. In step 2402, if the gNB can use CAT-2 LBT, the gNB performs step 2404. In step 2404, the gNB determines whether CAT CAT-2 LBT is successful before candidate position. In step 2404, if successful, the gNB transmits DRS in step 2406. In step 2404, if not successful, the gNB in step 2408 determines a next candidate position and burst duration. In step 2410, the gNB determines whether CAT-2 LBT can still be used. In step 2410, if yes, the gNB performs step 2404. In step 2410, if no, the gNB determines a lowest CAPC value for current burst duration and switches to CAT-4 LBT in step 2412. In step 2414, the gNB determines whether LBT engine of current CAPC is completed before candidate position. In step 2414, if yes, the gNB transmits discovery burst. In step 2414, if no, the gNB determines next candidate position and burst duration. In step 2420, the gNB determines whether a next candidate position is located in within discovery burst transmission window. In step 2420, if no, the gNB performs no transmission in current discovery burst transmission window step 2422. In step 2420, if yes, the gNB in step 2424 increases CAPC if burst duration exceeds MCOT of current CAPC.

In one example, the burst duration is determined and associated to the transmission starting location of the burst. Once a gNB intends to switch a starting location within the transmission window, the gNB may determine the burst duration for that starting location.

In one example, CAT-2 LBT can be used by a gNB if the transmission burst duration is at most 1ms with a duty cycle of at most 1/20.

In one example, the CAT-4 LBT with a given CAPC value can be used if the burst duration does not exceed the maximum COT corresponding to the CAPC value.

In one example, the periodicity in determining the duty cycle is the DRS window periodicity, which can be common irrespective of the starting position of the DRS transmission burst.

In one example, the transmission burst duration is the total duration of actually transmitted SSBs that starts after LBT success and the associated RMSI.

In one example, the transmission burst duration is the total duration of slots that overlap with the actually transmitted SSBs that starts after LBT success and the associated RMSI.

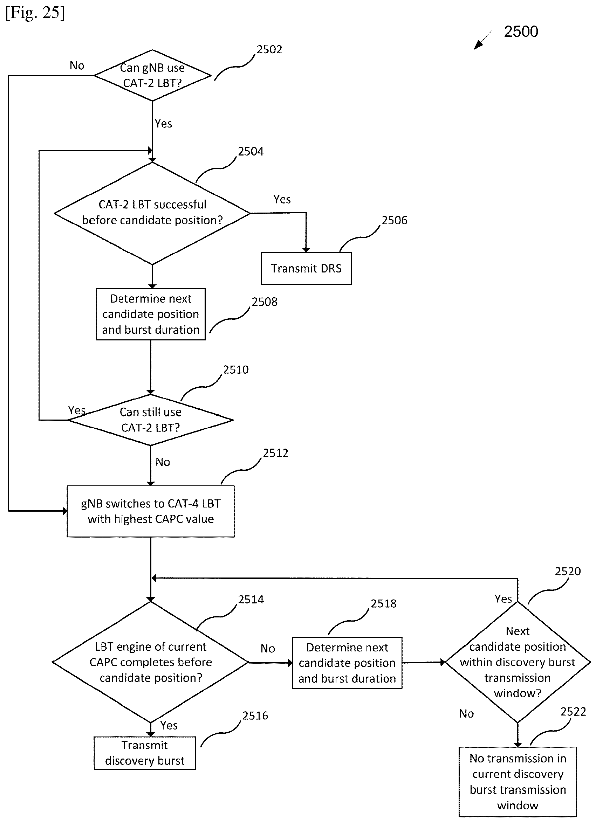

In one embodiment, the priority ordering of the LBT type that may be utilized by gNB to transmit the current channel/signal, ordered from the highest to the lowest, is: CAT-2 LBT, and CAT-4 LBT with channel access priority class (CAPC) value 4 (i.e., the highest CACP value); and if the gNB cannot use the CAT-2 the gNB may dynamically change the LBT engine to the CAT-4 LBT with highest CAPC value. As illustrated in FIGURE 25, the NR-U channel/signal to transmit is the discovery burst.

FIGURE 25 illustrates another flow chart of a method 2500 for adaptive LBT procedure according to embodiments of the present disclosure, as may be performed by a gNB (e.g., 101-103 as illustrated in FIGURE 1). An embodiment of the method 2500 shown in FIGURE 25 is for illustration only. One or more of the components illustrated in FIGURE 25 can be implemented in specialized circuitry configured to perform the noted functions or one or more of the components can be implemented by one or more processors executing instructions to perform the noted functions. Other embodiments are used without departing from the scope of the present disclosure.

As illustrated in FIGURE 25, the method 2500 begins at step 2502. In step 2402, the gNB determines whether the gNB can use CAT-2 LBT. In step 2502, if not, the gNB performs step 2512. In step 2502, if the gNB can use CAT-2 LBT, the gNB performs step 2504. In step 2504, the gNB determines whether CAT CAT-2 LBT is successful before candidate position. In step 2504, if successful, the gNB in step 2506 transmits DRS. In step 2504, if not successful, the gNB in step 2508, determines a next candidate position and burst duration. In step 2510, the gNB determines whether CAT-2 LBT can still be used. In step 2510, if yes, the gNB switches to CAT-4 LBT with a highest CAPC value in step 2512. In step 2514, the gNB determines whether LBT engine of current is CAPC completed before candidate position. In step 2514, if the LBT engine of current CAPC is completed before candidate position. The gNB in step 2516 transmits discovery burst. In step 2514, if no, the gNB in step 2518 determines next candidate position and burst duration. In step 2520, the gNB determines whether a next candidate position is located in within discovery burst transmission window. In step 2520, if no, the gNB performs no transmission in current discovery burst transmission window in step 2522. In step 2420, if yes, the gNB performs step 2514.

In one example, CAT-2 LBT can be used by a gNB if the transmission burst duration is at most 1ms with a duty cycle of at most 1/20.

In one example, the periodicity in determining the duty cycle is the DRS window periodicity, which can be common irrespective of the starting position of the DRS transmission burst.

In one example, the transmission burst duration is the total duration of actually transmitted SSBs that starts after LBT success and the associated RMSI.

In one example, the transmission burst duration is the total duration of slots that overlap with the actually transmitted SSBs that starts after LBT success and the associated RMSI.

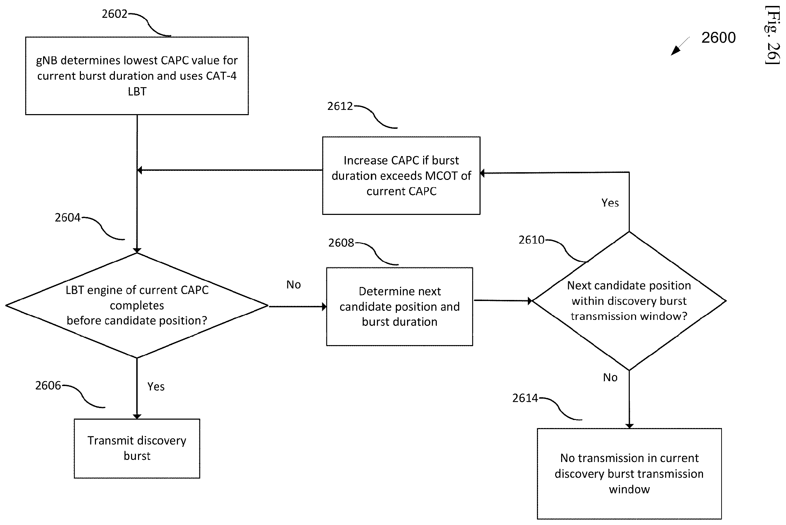

In one embodiment, the priority ordering of the LBT type that may be utilized by gNB to transmit the current channel/signal, ordered from the highest to the lowest, is is: CAT-4 LBT with channel access priority class (CAPC) value 1, CAT-4 LBT with CAPC value 2, CAT-4 LBT with CAPC value 3, and CAT-4 LBT with CAPC value 4; and if the gNB cannot use the LBT type with current priority order, the gNB may dynamically change the LBT engine to the LBT type corresponding to that with next lower priority. As illustrated in FIGURE 26, the NR-U channel/signal to transmit is the discovery burst.

FIGURE 26 illustrates a flow chart of a method 2600 for ordering of LBT type according to embodiments of the present disclosure, as may be performed by a gNB (e.g., 101-103 as illustrated in FIGURE 1). An embodiment of the method 2600 shown in FIGURE 26 is for illustration only. One or more of the components illustrated in FIGURE 26 can be implemented in specialized circuitry configured to perform the noted functions or one or more of the components can be implemented by one or more processors executing instructions to perform the noted functions. Other embodiments are used without departing from the scope of the present disclosure.

As illustrated in FIGURE 26, the method 2600 begins at step 2602. In step 2602, the gNB determines a lowest CAPC value for current burst duration and uses CAT-4 LBT. In step 2604, the gNB determines whether LBT engine of current CAPC is completed before candidate position. In step 2604, if yes, the gNB in step 2606 transmits discovery burst. In step 2604, if no, the gNB determines a next candidate position and burst duration in step 2608. In step 2610, the gNB determines whether a next candidate position is located within discovery burst transmission window. In step 2610, if no, the gNB in step 2614 performs no transmission in current discovery burst transmission window. In step 2610, if yes, the gNB in step 2612 increases CAPC if burst duration exceeds MCOT of current CAPC.

In one example, the CAT-4 LBT with a given CAPC value can be used if the burst duration does not exceed the maximum COT corresponding to the CAPC value.

In one example, the periodicity in determining the duty cycle is the DRS window periodicity, which can be common irrespective of the starting position of the DRS transmission burst.

In one example, the transmission burst duration is the total duration of actually transmitted SSBs that starts after LBT success and the associated RMSI.

In one example, the transmission burst duration is the total duration of slots that overlap with the actually transmitted SSBs that starts after LBT success and the associated RMSI.

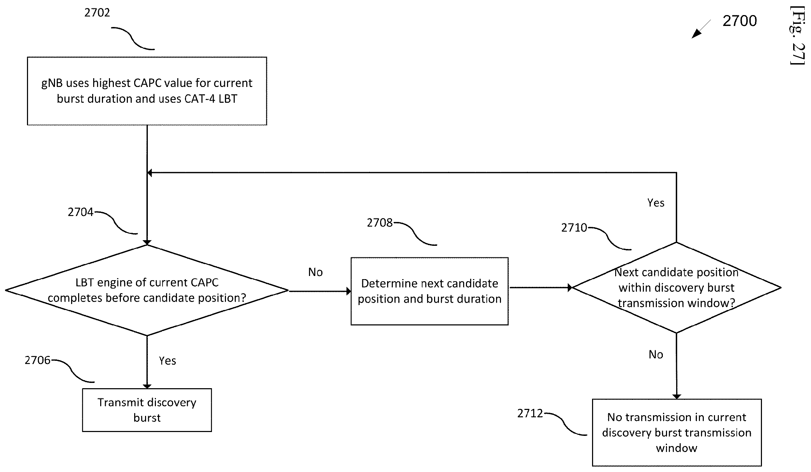

In one embodiment, the gNB always uses the CAT-4 LBT with channel access priority class (CAPC) value 4 (i.e., the highest CACP value). As illustrated in FIGURE 27, the NR-U channel/signal to transmit is the discovery burst.

FIGURE 27 illustrates another flow chart of a method 2700 for ordering of LBT type according to embodiments of the present disclosure, as may be performed by a gNB (e.g., 101-103 as illustrated in FIGURE 1). An embodiment of the method 2700 shown in FIGURE 27 is for illustration only. One or more of the components illustrated in FIGURE 27 can be implemented in specialized circuitry configured to perform the noted functions or one or more of the components can be implemented by one or more processors executing instructions to perform the noted functions. Other embodiments are used without departing from the scope of the present disclosure.

As illustrated in FIGURE 27, the method 2700 begins at step 2702. In step 2702, the gNB uses a highest CAPC value for current burst duration and uses CAT-4 LBT. In step 2704, the gNB determines whether LBT engine of current CAPC is completed before candidate position. In step 2704, if yes, the gNB in step 2706 transmits discovery burst. In step 2704, if no, the gNB determines a next candidate position and burst duration in step 2708. In step 2710, the gNB determines whether a next candidate position is located within discovery burst transmission window. In step 2710, if no, the gNB in step 2712 performs no transmission in current discovery burst transmission window. In step 2710, if yes, the gNB performs step 2704.

In one example, the transmission burst duration is the total duration of actually transmitted SSBs that starts after LBT success and the associated RMSI.

In one example, the transmission burst duration is the total duration of slots that overlap with the actually transmitted SSBs that starts after LBT success and the associated RMSI.

In one embodiment, the gNB determines the maximum possible transmission duration of the transmission burst, with respect to all possible starting locations in the transmission window, and utilizes the corresponding allowed LBT type and/or priority class, regardless of the transmission starting location in the transmission window.

In one embodiment, possibly applicable to approaches of this embodiment, the determination method for LBT type and/or priority class is applicable only to discovery burst transmission when M in the configuration is 1 or 2.

In one embodiment, possibly applicable to approaches of this embodiment, the determination method for LBT type and/or priority class is applicable only to discovery burst transmission wherein the SS/PBCH block(s) and associated CORESET/PDSCH for SIB1 are intended to be transmitted in the same burst and share the same channel occupancy.

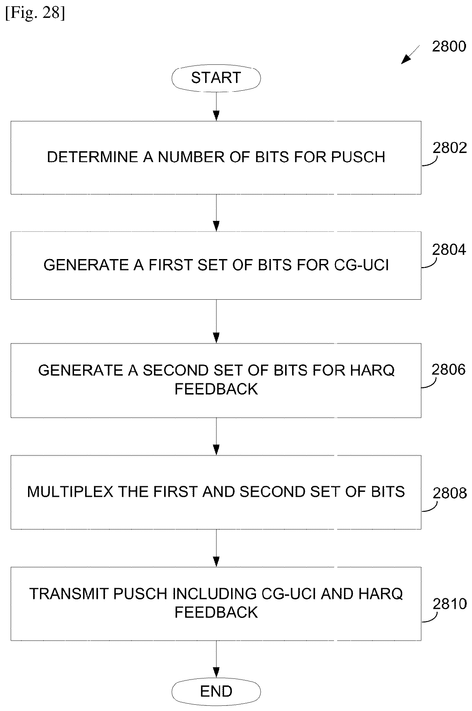

FIGURE 28 illustrates a flow chart of a method 2800 for window size adaptation according to embodiments of the present disclosure, as may be performed by a user equipment (UE) (e.g., 111-116 as illustrated in FIGURE 1). An embodiment of the method 2800 shown in FIGURE 28 is for illustration only. One or more of the components illustrated in FIGURE 28 can be implemented in specialized circuitry configured to perform the noted functions or one or more of the components can be implemented by one or more processors executing instructions to perform the noted functions. Other embodiments are used without departing from the scope of the present disclosure.

As illustrated in FIGURE 28, the method 2800 begins at step 2802. In step 2802, the UE determines a number of bits for a physical uplink shared channel (PUSCH).

In step 2804, the UE generates a first set of bits for grant uplink control information (CG-UCI).

In step 2806, the UE generates a second set of bits for a hybrid automatic repeat request (HARQ) feedback.

In step 2808, the UE multiplexes the first set of bits for the CG-UCI and the second set of bits for the HARQ feedback into the PUSCH, if a sum of the first and second set of bits does not exceed the determined number of bits for the PUSCH, wherein the first set of bits for the CG-UCI is multiplexed with a higher priority than the second set of bits for the HARQ feedback.

In step 2810, the UE transmits, to a base station (BS) over an uplink channel, the PUSCH including the multiplexed first and second set of bits for the CG-UCI and the HARQ feedback, respectively.

In one embodiment, the UE does not multiplex the first set of bits for the CG-UCI with the second set of bits for the HARQ feedback, if the sum of the first and second set of bits exceeds the determined number of bits for the PUSCH.

In one embodiment, the UE determines a power offset value for the PUSCH that is identical to a power offset value $\beta_{offset}^{HARQ-ACK}$ for the HARQ feedback, when the PUSCH includes the multiplexed first and second set of bits for the CG-UCI and the HARQ feedback, respectively.

In one embodiment, the UE generates a third set of bits for channel state information (CSI) and multiplexes the third set of bits for the CSI with the first set of bits for the CG-UCI and the second set of bits for the HARQ feedback into the PUSCH, if a sum of the first, second, and third set of bits does not exceed the determined number of bits for the PUSCH. In such embodiment, the third set of bits for the CSI is multiplexed with a lowest priority than the first and second set of bits for the CG-UCI and the HARQ, respectively.

In one embodiment, the UE does not multiplex at least part of the third set of bits for the CSI with the first and second set of bits, if the sum of the first, second, and third set of bits exceeds the determined set of bits the PUSCH.

In one embodiment, the UE receives, from the BS, a discovery burst according to a transmission window for the discovery burst.

In one embodiment, the UE identifies the transmission window based on a duty cycle that is defined as $D_{DB}/P_{DB}$, where $D_{DB}$ is a duration of the discovery burst that is determined based on a transmission starting instance of the discovery burst and $P_{DB}$ is a periodicity of the transmission window for the discovery burst.

Although the present disclosure has been described with an exemplary embodiment, various changes and modifications may be suggested to one skilled in the art. It is intended that the present disclosure encompass such changes and modifications as fall within the scope of the appended claims. None of the description in this application should be read as implying that any particular element, step, or function is an essential element that must be included in the claims scope. The scope of patented subject matter is defined by the claims.

**Claims**

1.  A user equipment, UE, in a wireless communication system, the UE comprising:

    a transceiver (310), and
    a processor (340) configured to:

       multiplex (2001, 2101) configured grant uplink control information, CG-UCI. on a configured grant-physical uplink shared channel, CG-PUSCH,
       in case that enough resources for a hybrid automatic repeat request-acknowledgement, HARQ-ACK, on the CG-PUSCH are available, multiplex (2004, 2104) the HARQ-ACK on the CG-PUSCH,
       in case that enough resources for sub-band channel state information, CSI, part 1 on the CG-PUSCH are available,
       multiplex (2007, 2107) the sub-band CSI part 1 on the CG-PUSCH, in case that not enough resources for sub-band CSI part 2 on the CG-PUSCH are available, multiplex (2009, 2109) the sub-band CSI part 2 on a physical uplink control channel, PUCCH, and
       transmit, to a base station, BS, the CG-PUSCH and the PUCCH.

2.  The UE of Claim 1, wherein the processor is further configured to receive, from the BS via the transceiver, a discovery burst based on a transmission window for the discovery burst.

3.  A base station, BS, in a wireless communication system, the BS comprising:

    a transceiver (210a), and
    a processor (225) configured to:

       receive, from a user equipment, UE, a configured grant physical uplink shared channel, CG-PUSCH, and a physical uplink control channel, PUCCH,
       wherein:

          in case that enough resources for hybrid automatic repeat request-acknowledgement, HARQ-ACK, and sub-band channel state information, CSI, part 1 on the CG-PUSCH are available and not enough resources for sub-band channel state information, CSI, part 2 on the CG-PUSCH are available, configured grant uplink control information, CG-UCI, the HARQ-ACK, and the sub-band CSI part 1 are multiplexed on the CG-PUSCH and the sub-band CSI part 2 is multiplexed on the PUCCH.

4.  The BS of Claim 3, wherein the processor is further configured to transmit, to the UE via the transceiver, a discovery burst based on a transmission window for the discovery burst.

5.  A method of a user equipment, UE, in a wireless communication system, the method comprising:

       multiplexing (2101) configured grant uplink control information, CG-UCI, on a configured grant-physical uplink shared channel, CG-PUSCH,
       in case that enough resources for a hybrid automatic repeat request-acknowledgement, HARQ-ACK, on the PUSCH are available, multiplexing (2104) the HARQ-ACK on the CG-PUSCH in case that enough resources for sub-band channel state information, CSI, part 1 on the CG-PUSCH are available,
       multiplexing (2107) sub-band CSI part 1 on the CG-PUSCH, in case that not enough resources for sub-band CSI part 2 on the CG-PUSCH are available, multiplexing (2109) the sub-band CSI part 2 on a physical uplink control channel, PUCCH, and
       transmit, to a base station, BS, the CG-PUSCH and the PUCCH.

6. The method of Claim 5, further comprising:
receiving, from the BS, a discovery burst based on a transmission window for the discovery burst.

7. A method of a base station, BS, in a wireless communication system, the method comprising:

receiving, from a user equipment, UE, a configured grant physical uplink shared channel, CG-PUSCH, and a physical uplink control channel, PUCCH, wherein:

in case that enough resources for hybrid automatic repeat request-acknowledgement, HARQ-ACK, and sub-band channel state information, CSI, part 1 on the CG-PUSCH are available and not enough resources for sub-band channel state information, CSI, part 2 on the CG-PUSCH are available, configured grant uplink control information, CG-UCI, the HARQ-ACK, and the sub-band CSI part 1 are multiplexed on the CG-PUSCH and the sub-band CSI part 2 is multiplexed on the PUCCH.

8. The method of Claim 7, further comprising:
transmitting, to the UE, a discovery burst based on a transmission window for the discovery burst.

**Patentansprüche**

1. Benutzergerät, UE, in einem drahtlosen Kommunikationssystem, wobei das UE Folgendes umfasst:

einen Transceiver (310), und
einen Prozessor (340), der konfiguriert ist zum:

Multiplexen (2001, 2101) von Uplink-Steuerinformationen mit konfigurierter Genehmigung, CG-UCI, auf einem physikalischen gemeinsam genutzten Uplink-Kanal mit konfigurierter Genehmigung, CG-PUSCH, falls genügend Ressourcen für eine Bestätigung für eine hybride automatische Wiederholungsanforderung, HARQ-ACK, auf dem CG-PUSCH zur Verfügung stehen, Multiplexen (2004, 2104) der HARQ-ACK auf dem CG-PUSCH,
falls genügend Ressourcen für Teilband-Kanalzustandsinformationen, CSI, Teil 1 auf dem CG-PUSCH zur Verfügung stehen, Multiplexen (2007, 2107) der Teilband-CSI Teil 1 auf dem CG-PUSCH,
falls nicht genügend Ressourcen für Teilband-CSI Teil 2 auf dem CG-PUSCH zur Verfügung stehen, Multiplexen (2009, 2109) der Teilband-CSI Teil 2 auf einem physikalischen Uplink-Steuerkanal, PUCCH, und
Übertragen, an eine Basisstation, BS, des CG-PUSCH und des PUCCH.

2. UE nach Anspruch 1, wobei der Prozessor ferner konfiguriert ist, um von der BS über den Transceiver einen Auffindungs-Burst basierend auf einem Übertragungsfenster für den Auffindungs-Burst zu empfangen.

3. Basisstation, BS, in einem drahtlosen Kommunikationssystem, wobei die BS Folgendes umfasst:

einen Transceiver (210a), und
einen Prozessor (225), der konfiguriert ist zum:

Empfangen, von einem Benutzergerät, UE, eines physikalischen gemeinsam genutzten Uplink-Kanals mit konfigurierter Genehmigung, CG-PUSCH, und eines physikalischen Uplink-Steuerkanals, PUCCH, wobei:
falls genügend Ressourcen für eine Bestätigung für eine hybride automatische Wiederholungsanforderung, HARQ-ACK, und Teilband-Kanalzustandsinformationen, CSI, Teil 1 auf dem CG-PUSCH zur Verfügung stehen und nicht genügend Ressourcen für Teilband-Kanalzustandsinformationen, CSI, Teil 2 auf dem CG-PUSCH zur Verfügung stehen, Uplink-Steuerinformationen mit konfigurierter Genehmigung, CG-UCI, die HARQ-ACK und die Teilband-CSI Teil 1, auf dem CG-PUSCH gemultiplext werden und die Teilband-CSI Teil 2 auf dem PUCCH gemultiplext werden.

4. BS nach Anspruch 3, wobei der Prozessor ferner konfiguriert ist, um an das UE über den Transceiver einen Auffindungs-Burst basierend auf einem Übertragungsfenster für den Auffindungs-Burst zu übertragen.

5. Verfahren eines Benutzergeräts, UE, in einem drahtlosen Kommunikationssystem, wobei das Verfahren Folgendes umfasst:

Multiplexen (2101) von Uplink-Steuerinformationen mit konfigurierter Genehmigung, CG-UCI, auf einem physikalischen gemeinsam genutzten Uplink-Kanal mit konfigurierter Genehmigung, CG-PUSCH,
falls genügend Ressourcen für eine Bestätigung für eine hybride automatische Wiederholungsanforderung, HARQ-ACK, auf dem PUSCH zur Verfügung stehen, Multiplexen (2104) der HARQ-ACK auf dem CG-PUSCH
falls genügend Ressourcen für Teilband-Kanalzustandsinformationen, CSI, Teil 1 auf dem CG-PUSCH zur Verfügung stehen, Multiplexen (2107) der Teilband-CSI Teil 1 auf dem CG-PUSCH,
falls nicht genügend Ressourcen für Teilband-CSI Teil 2 auf dem CG-PUSCH zur Verfügung stehen, Multiplexen (2109) der Teilband-CSI Teil 2 auf einem physikalischen Uplink-Steuerkanal, PUCCH, und
Übertragen, an eine Basisstation, BS, des CG-PUSCH und des PUCCH.

6. Verfahren nach Anspruch 5, ferner umfassend:
Empfangen, von der BS, eines Auffindungs-Bursts basierend auf einem Übertragungsfenster für den Auffindungs-Burst.

7. Verfahren einer Basisstation, BS, in einem drahtlosen Kommunikationssystem, wobei das Verfahren Folgendes umfasst:

Empfangen, von einem Benutzergerät, UE, eines physikalischen gemeinsam genutzten Uplink-Kanals mit konfigurierter Genehmigung, CG-PUSCH, und eines physikalischen Uplink-Steuerkanals, PUCCH,
wobei:
falls genügend Ressourcen für eine Bestätigung für eine hybride automatische Wiederholungsanforderung, HARQ-ACK, und Teilband-Kanalzustandsinformationen, CSI, Teil 1 auf dem CG-PUSCH zur Verfügung stehen und nicht genügend Ressourcen für Teilband-Kanalzustandsinformationen, CSI, Teil 2 auf dem CG-PUSCH zur Verfügung stehen, Uplink-Steuerinformationen mit konfigurierter Genehmigung, CG-UCI, die HARQ-ACK und die Teilband-CSI Teil 1, auf dem CG-PUSCH gemultiplext werden und die Teilband-CSI Teil 2 auf dem PUCCH gemultiplext werden.

8. Verfahren nach Anspruch 7, ferner umfassend:
Übertragen, an das UE, eines Auffindungs-Bursts basierend auf einem Übertragungsfenster für den Auffindungs-Burst.

## Revendications

1. Équipement utilisateur, UE, dans un système de communication sans fil, l'UE comprenant :

un émetteur-récepteur (310), et
un processeur (340) configuré pour :

multiplexer (2001, 2101) des informations de commande de liaison montante d'autorisation configurée, CG-UCI, sur un canal partagé de liaison montante physique d'autorisation configurée, CG-PUSCH,
en cas de disponibilité de ressources suffisantes pour un demande-accusé de réception, HARQ-ACK, de demande de répétition automatique hybride sur le CG-PUSCH, multiplexer (2004, 2104) le HARQ-ACK sur le CG-PUSCH,
dans le cas où il y a suffisamment de ressources pour la partie 1 d'informations d'état de canal de sous-bande, CSI, sur le CG-PUSCH, disponibles, multiplexer (2007, 2107) la partie 1 d'informations CSI de sous-bande sur le CG-PUSCH,
dans le cas où il n'y a pas suffisamment de ressources disponibles pour la partie 2 de CSI de sous-bande sur le CG-PUSCH, multiplexer (2009, 2109) la partie 2 de CSI de sous-bande sur un canal de commande de liaison montante physique, PUCCH, et
transmettre à une station de base, BS, le CG-PUSCH et le PUCCH.

2. UE de la revendication 1, dans lequel le processeur est en outre configuré pour recevoir, depuis la BS via l'émetteur-récepteur, une salve de découverte sur la base d'une fenêtre de transmission pour la salve de découverte.

**3.** Station de base, BS, dans un système de communication sans fil, la BS comprenant :

un émetteur-récepteur (210a), et
un processeur (225) configuré pour :

recevoir, depuis un équipement utilisateur, UE, un canal partagé de liaison montante physique d'autorisation configurée, CG-PUSCH, et un canal de commande de liaison montante physique, PUCCH,
dans laquelle :
dans le cas où il y a suffisamment de ressources pour l'accusé de réception, HARQ-ACK, de demande de répétition automatique hybride, et la partie 1 d'informations d'état de canal de sous-bande, CSI, sur le CG-PUSCH disponibles et pas suffisamment de ressources pour la partie 2 d'informations d'état de canal de sous-bande, CSI, sur le CG-PUSCH, disponibles, des informations de commande de liaison montante d'autorisation configurée, CG-UCI, le HARQ-ACK, et la partie 1de CSI de sous-bande sont multiplexés sur le CG-PUSCH et la partie 2 de CSI de sous-bande est multiplexée sur le PUCCH.

**4.** BS de la revendication 3, dans laquelle le processeur est en outre configuré pour transmettre, à l'UE via l'émetteur-récepteur, une salve de découverte en se basant sur une fenêtre de transmission pour la salve de découverte.

**5.** Procédé d'un équipement utilisateur, UE, dans un système de communication sans fil, le procédé comprenant :

multiplexer (2101) des informations de commande de liaison montante d'autorisation configurée, CG-UCI, sur un canal partagé de liaison montante physique d'autorisation configurée, CG-PUSCH,
en cas de disponibilité de ressources suffisantes pour un demande-accusé de réception, HARQ-ACK, de demande de répétition automatique hybride sur le PUSCH, multiplexer (2104) le HARQ-ACK sur le CG-PUSCH,
dans le cas où il y a suffisamment de ressources pour la partie 1 d'informations d'état de canal de sous-bande, CSI, sur le CG-PUSCH, disponibles, multiplexer (2007, 2107) la partie 1 d'informations CSI de sous-bande sur le CG-PUSCH,
dans le cas où il n'y a pas suffisamment de ressources disponibles pour la partie 2 de CSI de sous-bande sur le CG-PUSCH, multiplexer (2109) la partie 2 de CSI de sous-bande sur un canal de commande de liaison montante physique, PUCCH, et
transmettre à une station de base, BS, le CG-PUSCH et le PUCCH.

**6.** Procédé de la revendication 5, comprenant en outre :
recevoir, depuis la station de base, une salve de découverte sur la base d'une fenêtre de transmission pour la salve de découverte.

**7.** Procédé d'une station de base, BS, dans un système de communication sans fil, le procédé comprenant:

recevoir, depuis un équipement utilisateur, UE, un canal partagé de liaison montante physique d'autorisation configurée, CG-PUSCH, et un canal de commande de liaison montante physique, PUCCH,
dans lequel :
dans le cas où il y a suffisamment de ressources pour l'accusé de réception, HARQ-ACK, de demande de répétition automatique hybride, et la partie 1 d'informations d'état de canal de sous-bande, CSI, sur le CG-PUSCH disponibles et pas suffisamment de ressources pour la partie 2 d'informations d'état de canal de sous-bande, CSI, sur le CG-PUSCH, disponibles, des informations de commande de liaison montante d'autorisation configurée, CG-UCI, le HARQ-ACK, et la partie 1de CSI de sous-bande sont multiplexés sur le CG-PUSCH et la partie 2 de CSI de sous-bande est multiplexée sur le PUCCH.

**8.** Procédé de la revendication 7, comprenant en outre :
transmettre, à l'UE, une salve de découverte en se basant sur une fenêtre de transmission pour la salve de découverte.

[Fig. 1]

[Fig. 2]

[Fig. 3]

[Fig. 4]

[Fig. 5]

500

510 Received Signal

520 Filter

530 CP

550 SC Mapping

540 FFT

560 Channel Estimator / Demodulator

555 Control of Reception BW

570 Rate Dematcher

580 Decoder

590 Information Bits

EP 4 014 650 B1

38

EP 4 014 650 B1

[Fig. 6]

600

Control
Signal

690

Interleaver &
Modulator

680

Rate
Matcher

670

Channel
Encoder

660

Append CRC

650

XOR

630

Masked
CRC

RNTI
Mask

640

CRC

CRC
Computator

620

DCI
Format

610

39

[Fig. 7]

700

710 Control Signal → 720 Demodulator & De-interleaver → 730 Rate Matcher → 740 Channel Decoder → 750 CRC Extractor

750 CRC Extractor → CRC → 770 ⊗ XOR ← RNTI Mask 780 → 790 CRC Check

760 ⌄ DCI Format Bits

[Fig. 8]

[Fig. 9]

900

PDSCH 1

PDSCH 2

PDSCH 3

CWS BW 0

CWS BW 1

CWS BW 2

CWS BW 3

Reference T/F resource

[Fig. 10]

1000

CB0   CB1   CB2

CB3

CB4

CB5

CWS BW 0

CWS BW 1

CWS BW 2

CWS BW 3

Reference T/F resource

[Fig. 11]

1100

CWS BW 0

CB0  CB2  CB4  CB6

CWS BW 1

CWS BW 2

CB1  CB3  CB5  CB7

CWS BW 3

Reference T/F resource

[Fig. 12]

1200

PDSCH 1

CWS BW 0

10%

PDSCH 2

90%

CWS BW 1

Reference T/F resource

[Fig. 13]

[Fig. 14]

1400

Case 2

CWS for
BWP1

BWP1

BWP0

CWS for
BWP0

[Fig. 15]

1500

Case 2

CBG
0

CBG
1

BWP1

BWP0

CBG
2

CBG
3

Last reference T/F
resource of BWP1

[Fig. 16]

1600

HARQ-ACK(s) of last reference
T/F resource of BWP0

BWP0

BWP1

BWP0

f

t

Last reference T/F
resource of BWP0

[Fig. 17]

Case 2

1700

LBT BW0

CBG0

LBT BW1

CBG1

BWP1

BWP0

LBT BW2

CBG2

LBT BW3

CBG3

Last reference T/F
resource of BWP1

[Fig. 18]

[Fig. 19]

1900

EP 4 014 650 B1

48

[Fig. 20]

2000

[Fig. 21]

2100

2101 — UE multiplexes CG-UCI on CG-PUSCH

2102 — Enough resources for HARQ-ACK on CG-PUSCH?

No → UE drops HARQ-ACK or multiplexes it on PUSCH/PUCCH — 2103

Yes

2104 — UE multiplexes HARQ-ACK on CG-PUSCH

2105 — Enough resources for type II sub-band CSI part1 on CG-PUSCH?

No → UE drops type II sub-band CSI part1 or multiplexes it on PUSCH/PUCCH — 2106

Yes

2107 — UE multiplexes type II sub-band CSI part1 on CG-PUSCH

2108 — Enough resources for type II sub-band CSI part2 on CG-PUSCH?

No → UE drops all or part of type II sub-band CSI part2 or multiplexes all or part of type II sub-band CSI part2 on PUSCH/PUCCH — 2109

Yes

2110 — UE multiplexes type II sub-band CSI part2 on CG-PUSCH

[Fig. 22]

2200

2201 — UE multiplexes CG-UCI on CG-PUSCH

2202 — Enough resources for HARQ-ACK on CG-PUSCH?

No → UE drops HARQ-ACK or multiplexes it on PUSCH/PUCCH — 2203

Yes

2204 — UE multiplexes HARQ-ACK on CG-PUSCH

2205 — Enough resources for Wideband CSI on CG-PUSCH?

No → UE drops wideband CSI or multiplexes it on PUSCH/PUCCH — 2206

Yes

2207 — UE multiplexes wideband CSI on CG-PUSCH

[Fig. 23]

EP 4 014 650 B1

52

[Fig. 24]

2400

**Can gNB use CAT-2 LBT?** — 2402 — No

Yes

**CAT-2 LBT successful before candidate position?** — 2404

Yes → **Transmit DRS** — 2406

No — 2408

**Determine next candidate position and burst duration**

**Can still use CAT-2 LBT?** — 2410

Yes

No — 2412

**gNB determines lowest CAPC value for current burst duration and switches to CAT-4 LBT**

**Increase CAPC if burst duration exceeds MCOT of current CAPC** — 2424

**LBT engine of current CAPC completes before candidate position?** — 2414

No → **Determine next candidate position and burst duration** — 2418

**Next candidate position within discovery burst transmission window?** — 2420

Yes

No

Yes — 2416

**Transmit discovery burst**

**No transmission in current discovery burst transmission window** — 2422

[Fig. 25]

2500

- 2502 Can gNB use CAT-2 LBT?
  - No → (to 2512)
  - Yes ↓
- 2504 CAT-2 LBT successful before candidate position?
  - Yes → 2506 Transmit DRS
  - ↓ (No)
- 2508 Determine next candidate position and burst duration
  - ↓
- 2510 Can still use CAT-2 LBT?
  - Yes → (back to 2504)
  - No ↓
- 2512 gNB switches to CAT-4 LBT with highest CAPC value
  - ↓
- 2514 LBT engine of current CAPC completes before candidate position?
  - No → 2518 Determine next candidate position and burst duration
  - Yes ↓
- 2516 Transmit discovery burst
- 2518 → 2520 Next candidate position within discovery burst transmission window?
  - Yes → (back to 2512)
  - No ↓
- 2522 No transmission in current discovery burst transmission window

[Fig. 26]

2600

```
                    2602
        ┌──────────────────────────────┐
        │ gNB determines lowest CAPC   │
        │ value for current burst      │
        │ duration and uses CAT-4 LBT  │
        └──────────────────────────────┘
                    │
                    │                         2612
                    │              ┌──────────────────────────┐
                    │◄─────────────│ Increase CAPC if burst   │
                    │              │ duration exceeds MCOT of │
                    │              │ current CAPC             │
                    ▼              └──────────────────────────┘
            2604                                    ▲ Yes
         ◇ LBT engine of       No   ┌──────────────┐      2610
         current CAPC  ──────────►  │ Determine    │  ◇ Next candidate
         completes before          │ next         │──► position within
         candidate position?       │ candidate    │    discovery burst
              │                    │ position and │    transmission window?
              │ Yes                │ burst        │          │ No
              ▼                    │ duration     │          ▼
         2606                      └──────────────┘      2614
      ┌──────────────┐              2608            ┌──────────────────┐
      │ Transmit     │                              │ No transmission  │
      │ discovery    │                              │ in current       │
      │ burst        │                              │ discovery burst  │
      └──────────────┘                              │ transmission     │
                                                    │ window           │
                                                    └──────────────────┘
```

55

[Fig. 27]

[Fig. 28]

2800

```
                    ┌─────────┐
                    │  START  │
                    └─────────┘
                         │
                         ▼
  ┌─────────────────────────────────────────────┐
  │   DETERMINE A NUMBER OF BITS FOR PUSCH       │  2802
  └─────────────────────────────────────────────┘
                         │
                         ▼
  ┌─────────────────────────────────────────────┐
  │    GENERATE A FIRST SET OF BITS FOR CG-UCI   │  2804
  └─────────────────────────────────────────────┘
                         │
                         ▼
  ┌─────────────────────────────────────────────┐
  │   GENERATE A SECOND SET OF BITS FOR HARQ     │  2806
  │                 FEEDBACK                     │
  └─────────────────────────────────────────────┘
                         │
                         ▼
  ┌─────────────────────────────────────────────┐
  │   MULTIPLEX THE FIRST AND SECOND SET OF BITS │  2808
  └─────────────────────────────────────────────┘
                         │
                         ▼
  ┌─────────────────────────────────────────────┐
  │  TRANSMIT PUSCH INCLUDING CG-UCI AND HARQ    │  2810
  │                 FEEDBACK                     │
  └─────────────────────────────────────────────┘
                         │
                         ▼
                    ┌─────────┐
                    │   END   │
                    └─────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **INTEL CORPORATION**. Enhancements to configured grants for NR-unlicensed. *R1-1908627*, 30 August 2019
- NR; Physical channels and modulation. *3GPP TS 38.211*
- NR; Multiplexing and Channel coding. *3GPP TS 38.212*
- NR; Physical Layer Procedures for Control. *3GPP TS 38.213*
- NR; Physical Layer Procedures for Data. *3GPP TS 38.214*
- NR; Radio Resource Control (RRC) Protocol Specification. *3GPP TS 38.331*
- 5 GHz RLAN; Harmonized Standard covering the essential requirements of article 3.2 of Directive 2014/53/EU. *ETSI EN 301 893*, 2017
- Multiple-Gigabit/s radio equipment operating in the 60 GHz band; Harmonized Standard covering the essential requirements of article 3.2 of Directive 2014/53/EU. *ETSI EN 302 567*, 2017
- Study on Licensed-Assisted Access to Unlicensed Spectrum. *3GPP TR 36.889*, 2015
- Part 11: Wireless LAN Medium Access Control (MAC) and Physical Layer (PHY) Specifications. *IEEE Std 802.11-2016*, 2016